(19) **Europäisches Patentamt / European Patent Office / Office européen des brevets**

(11) **EP 4 682 831 A1**

(12) **EUROPEAN PATENT APPLICATION**

(43) Date of publication:
21.01.2026 Bulletin 2026/04

(21) Application number: 25188727.9

(22) Date of filing: 10.07.2025

(51) International Patent Classification (IPC):
*G06T 11/00* (2026.01)  *G06T 11/60* (2026.01)
*G06F 3/04845* (2022.01)

(52) Cooperative Patent Classification (CPC):
**G06T 11/001; G06F 3/04845; G06T 11/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 17.07.2024 JP 2024113941

(71) Applicant: **CANON KABUSHIKI KAISHA**
**Tokyo 146-8501 (JP)**

(72) Inventors:
• **OTAKA, Satoshi**
**Tokyo (JP)**
• **SAKAI, Hiroyuki**
**Tokyo (JP)**

(74) Representative: **WESER & Kollegen**
**Patentanwälte PartmbB**
**Radeckestraße 43**
**81245 München (DE)**

(54) **INFORMATION PROCESSING APPARATUS, METHOD FOR CONTROLLING INFORMATION PROCESSING APPARATUS, AND STORAGE MEDIUM**

(57) A non-transitory computer readable storage medium (104) storing a program which causes a computer to execute: obtaining (S1203) image data; and displaying (S1205) an object display region (72) in which an object is displayed, and an editing region (73) in which contents can be edited by adding the object, wherein the displaying includes displaying, on a basis of that a specific color is automatically extracted from the image data obtained, the object based on the specific color in the object display region.

FIG.24F

EP 4 682 831 A1

**Description**

TECHNICAL FIELD

The present disclosure relates to an information processing apparatus, a method for controlling an information processing apparatus, and a storage medium.

BACKGROUND

There is a contents editing application for designing a poster, a photo album, photo layout, and the like by placing objects such as images or text in an editing region on a screen.
Japanese Patent Laid-Open No. 2008-146227 discloses a technology to automatically generate a color scheme pattern based on a design rule from the colors of components actually placed in a page design, and automatically determine a color scheme of the components in the page design using the generated color scheme pattern.
There is a demand for improved usability in the contents editing application.

SUMMARY

The present disclosure in its first aspect provides a storage medium as specified in claim 1. Optional features are specified in claim 2 to 12. The present disclosure in its second aspect provides an information processing apparatus as specified in claim 13. The present disclosure in its third aspect provides a method as specified in claim 14.
The present disclosure makes it possible to improve the usability of the contents editing application.
Features of the present disclosure will become apparent from the following description of embodiments with reference to the attached drawings. The following description of embodiments are described by way of example.

BRIEF DESCRIPTION OF THE DRAWINGS

Fig. 1 is a diagram showing an example of an overall configuration of an information processing system;
Fig. 2 is a diagram showing an example of a hardware configuration of the information processing system;
Fig. 3 is a diagram showing an example of a software configuration used in the information processing system;
Fig. 4 is a diagram showing an example of an editing screen of a contents editing application;
Fig. 5 is a diagram showing an example of a software configuration of a print system;
Fig. 6 is a diagram showing an example of a printing application screen;
Fig. 7 is a diagram showing an example of an editing screen of the contents editing application;
Figs. 8A to 8D are diagrams each showing an example of a settings screen for color matching setting;
Fig. 9 is a diagram showing an example of the results of generating a color histogram from image data;
Figs. 10A to 10C are diagrams for explaining an example of extracting main colors using an RGB color space;
Fig. 11 is a diagram showing a configuration of software for setting main colors from an obtained contents file;
Fig. 12 is a flowchart of color palette display processing;
Fig. 13 is a flowchart of main color setting processing;
Fig. 14 is a flowchart of color palette color scheme change processing;
Figs. 15A to 15E are diagrams each showing an example of changing a color scheme of a color palette in a contents editing UI;
Figs. 16A to 16C are diagrams each illustrating an example of changing the color of editing target contents using the color palette;
Figs. 17A to 17D are diagrams each showing an example of a dialog screen for color matching setting;
Fig. 18 is a flowchart of color palette display processing;
Fig. 19 is a flowchart of main color setting processing;
Figs. 20A to 20E are diagrams each showing an example of changing the color scheme of the color palette in the contents editing UI;
Figs. 21A to 21C are diagram each illustrating an example of changing the color of the editing target contents using the color palette;
Figs. 22A to 22C are diagrams each illustrating an example of changing the color of the editing target contents using the color palette;
Figs. 23A to 23D are diagrams each showing an example of a dialog screen for color matching setting;
Figs. 24A to 24G are diagrams each illustrating a material selection UI before and after the color matching setting;

Fig. 25 is a diagram showing an example of an editing screen;
Figs. 26A and 26B are diagrams each illustrating registration and deletion of color matching color scheme setting; and
Fig. 27 is a flowchart of registration and deletion processing for color matching color scheme setting.

DESCRIPTION OF THE EMBODIMENTS

Hereinafter, preferred embodiments of the present disclosure will be described in detail with reference to the accompanying drawings. Note that the following embodiments do not limit the present disclosure, and not all combinations of features described in the following embodiments are necessarily essential to the solution of the present disclosure. The same components will be denoted by the same reference numerals.

(First Embodiment)

<Overview>

A contents editing application is an application for designing a poster, a photo album, photo layout, and the like. Hereinafter, an overview will be described below by taking poster editing as an example. For example, the contents editing application receives selection of a template desired by a user from among a variety of poster templates. The contents editing application displays a user interface (UI) for receiving an editing operation for an editing target poster.

The user performs an editing operation by selecting an object (such as a character, a rectangle, or a background) placed in the editing target poster displayed in an editing region. The user may also change colors to match the intended colors. Changing colors is one of the editing functions, and is performed using a color palette displayed on the UI. As the user selects a color placed in the color palette, for example, the contents editing application changes the color of the editing target object to the selected color. The user may also select a material that matches the intended color from among various materials prepared in advance, and input an instruction to add the material as an object to the editing target poster. Since the impression of the contents changes significantly with the color, there is a great need for editing the contents to match the intended color.

A so-called "Oshikatsu" activity has recently become more and more popular, in which people "osu", that is, support their favorite idols, actors, or characters in various ways. The target to be supported itself is also called an "Oshi". For example, one of such Oshikatsu activities is to bring official goods or self-made goods to a live performance or event of their "Oshi". Another example of such Oshikatsu activities is an activity in which people are literally "dyed" in the color of their Oshi by purchasing official goods, wearing self-made goods, or matching their clothes or accessories to the image color of their Oshi. There is also an activity of introducing the appealing points of their Oshi to other people. There is a need to make goods that match the color of Oshi in making self-made goods. Particularly, the color of Oshi is an important element for a user engaged in an Oshikatsu activity, leading to a great demand for making goods and the like in an appropriate color corresponding to his/her Oshi. Although it is possible to create goods in the Oshi's color using a contents editing application, there is room for improving usability, in order for the user to appropriately edit the contents in the Oshi's color. The following description will be given assuming that the user creates a poster of his/her Oshi. However, the contents are not limited to posters, and can be any contents of any deliverable such as a flyer, card, or fan. This is not limited to Oshikatsu, and can be applied to any use case for matching the desired color.

For example, as described above, the user can change the color of an object selected by himself/herself by using a color palette in a contents editing application. However, the number of colors in the set color palette is often limited, and there are cases where the user is unable to find the desired color (for example, the color of his/her Oshi). In addition, the color palette is generally composed of standard colors. If the user is unable to find the target color, he/she visually identifies a color that seems to match the desired color from a two-dimensional RGB gradation display, and finds the desired color through alignment using a mouse or the like. In the two-dimensional RGB gradation display, many RGB combinations are expressed in a limited display region. This makes it difficult and time-consuming for the user to find the desired color. As an alternative method, the user can input RGB values as numerical values to set the color. However, in a case where the user aims to match the color of an actual item at hand, for example, it is rare for the user to know the RGB values of the color. It is also possible to search for a similar color by changing the numerical values, but this is still time-consuming.

As another example, in a case of adding a new object to a poster being edited, the color needs to be changed after the object is added. Therefore, if there are many objects to be added, the color has to be changed for each added object, which is time-consuming.

As another method, in various types of image editing software, a dropper function is used to position a dropper in a position of each pixel of an image and obtain the color of the pixel at the position of the dropper. There is also a method of placing the obtained color in a color palette. In a case of aiming to match the color of an actual item at hand, for example, the user takes a picture of the item to create an image file. Then, the user can use the dropper function to specify the colors that suit the purpose one by one from an image obtained by loading the image file into the software. However, if there are many desired colors, the number of colors to be set increases, which is time-consuming.

In embodiments described below, a contents editing application uses a color palette to change the color of an object placed in an editing target content (for example, a poster). Next, description will be given of an example of display control of a user interface (UI) that allows a user to set a color scheme of a color palette that facilitates selection of colors according to the purpose without requiring much time and effort. This improves the usability of the contents editing application.

<Overall System Configuration>

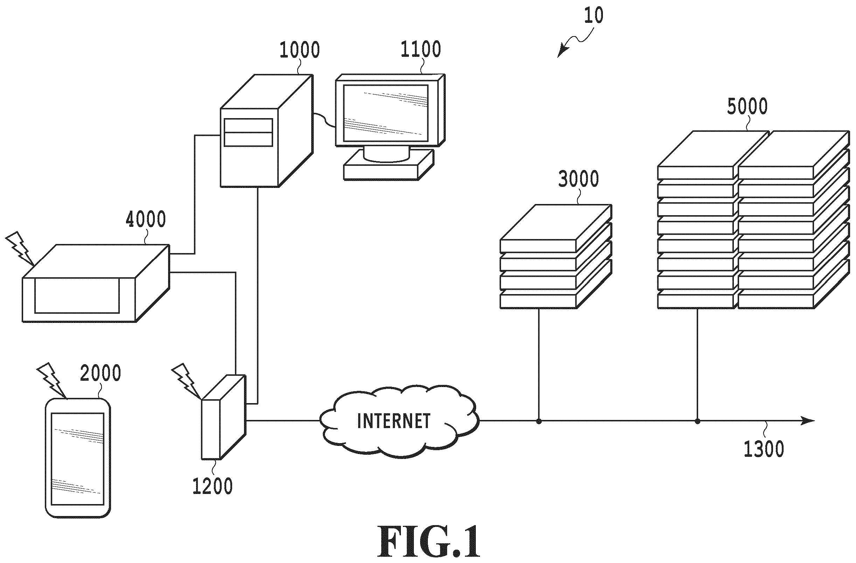

Fig. 1 is a diagram showing an example of an overall configuration of an information processing system 10 according to the present embodiment. An information processing system 10 includes a client computer 1000, a display 1100, a router 1200, a mobile terminal 2000, a server computer 3000, a printer 4000, and an information collection server computer 5000.

The client computer 1000 is connected to the display 1100 by a communication cable, and displays data stored in the client computer 1000 on the display 1100. The client computer 1000 is also connected to the router 1200 by wired or wireless communication, and is connected via the router 1200 to other communication devices that can communicate via the Internet 1300.

The mobile terminal 2000 is connected to the router 1200 by wireless communication, and is connected via the router 1200 to other communication devices that can communicate via the Internet 1300. The server computer 3000 is connected to other communication devices that can communicate via the Internet 1300. The server computer 3000 receives data held in the client computer 1000 or the mobile terminal 2000, stores the data in a memory, processes the data, and sends the data to other devices.

The printer 4000 receives data stored in the client computer 1000, the mobile terminal 2000 or the server computer 3000 to perform printing on a print medium. The information collection server computer 5000 is connected to other communication devices that can communicate via the Internet 1300. The information collection server computer 5000 receives data held in the client computer 1000 or the mobile terminal 2000, stores the data in a memory, aggregates the data, and sends the data to other devices. Next, the information processing system of the present embodiment will be described by taking a connection configuration in the above information processing system as an example.

<Description of Configuration>

(1) Basic Configuration

(1-1) Hardware Configuration

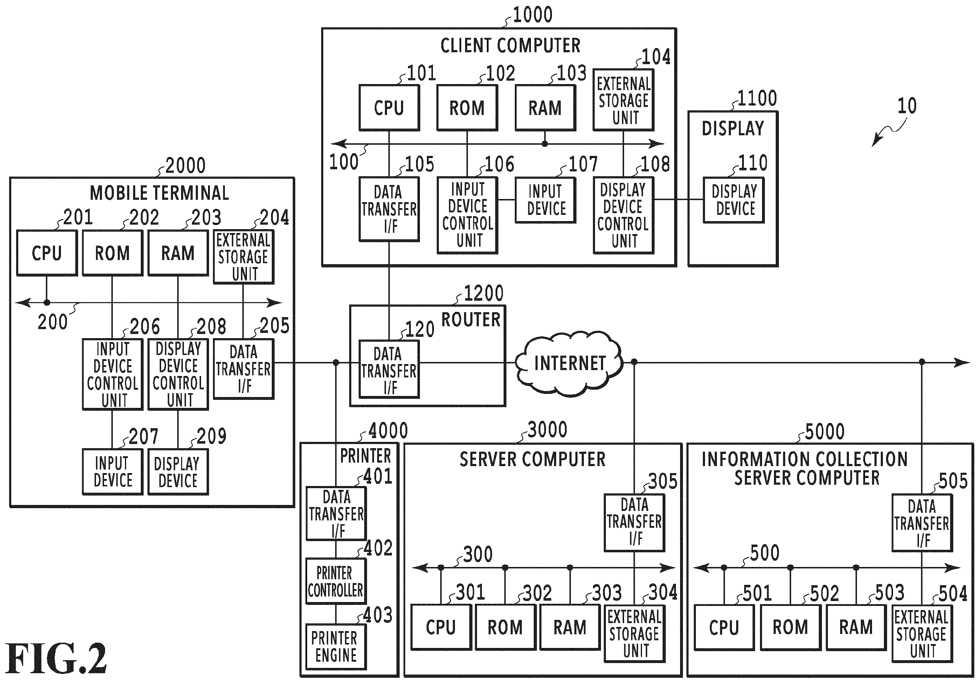

Fig. 2 is a diagram showing an example of a hardware configuration of the information processing system 10 according to the present embodiment. With reference to Fig. 2, the configurations of the client computer 1000, the display 1100, the router 1200, the mobile terminal 2000, the server computer 3000, the printer 4000, and the information collection server computer 5000 will be described.

(Client Computer 1000)

The client computer 1000 includes a central processing unit (CPU) 101, a read-only memory (ROM) 102, a random access memory (RAM) 103, an external storage unit 104, a data transfer interface (I/F) 105, an input device 107, and a display device control unit 108. The client computer 1000 corresponds to a commonly used personal computer (PC) or the like.

The CPU 101 is a central processing unit configured to perform processing according to a specified program. The ROM 102 is a non-volatile storage, which can store table data and programs used in respective processes to be described later. The RAM 103 is a volatile storage to temporarily store programs and data. The external storage unit 104 is a non-volatile storage to store programs and data. The CPU 101 receives the programs and image data stored in the ROM 102, the RAM 103 or the external storage unit 104, and performs arithmetic processing.

The data transfer I/F 105 controls data transmission and reception between the server computer 3000, the printer 4000, and the information collection server computer 5000 via the router 1200. A connection method for data transmission and reception can be wired connection through USB, IEEE 1394, LAN or the like, or wireless connection through Bluetooth or WiFi.

The input device control unit 106 is an I/F configured to obtain information on operations by a user and transmit control information to each processing unit. The input device 107 is a human interface device (HID) such as a keyboard or a mouse. The user can perform input operations via the input device 107. The display device control unit 108 sends drawing data from the ROM 102, the RAM 103 or the external storage unit 104 to the display 1100. The display 1100 displays the received data on a display device 110.

(Mobile Terminal 2000)

In Fig. 2, the mobile terminal 2000 includes a CPU 201, a ROM 202, a RAM 203, an external storage unit 204, a data transfer I/F 205, an input device control unit 206, an input device 207, a display device control unit 208, and a display device 209. The mobile terminal 2000 mainly has computer functions such as a tablet computer or smartphone, and often has a touch panel display.

The CPU 201 performs the same processing as the CPU 101. The ROM 202 has the same functions as the ROM 102. The RAM 203 has the same functions as the RAM 103. The external storage unit 204 has the same functions as the external storage unit 104. The data transfer I/F 205 performs the same processing as the data transfer I/F 105. The input device control unit 206 performs the same processing as the input device control unit 106.

The input device 207 is the same as the input device 107. The input device 207 is a device capable of performing input operations on a screen, such as a touch panel equipped with display and input functions of a tablet computer or smartphone. The display device control unit 208 is an I/F configured to transmit data from the ROM 202, the RAM 203 or the external storage unit 204 to the display device 209 as drawing data. The display device 209 displays the drawing data received from the display device control unit 208. In many cases, the display device 209 is built into the mobile terminal 2000.

(Server Computer 3000)

In Fig. 2, the server computer 3000 includes a CPU 301, a ROM 302, a RAM 303, an external storage unit 304, and a data transfer I/F 305. The CPU 301 performs the same processing as the CPU 101. The ROM 302 has the same functions as the ROM 102. The RAM 303 has the same functions as the RAM 101. The external storage unit 304 is the same as the external storage unit 104. The data transfer I/F 305 controls data transmission and reception between the client computer 1000, the printer 4000 or the information collection server computer 5000 via the router 1200. The server computer 3000 is mainly connected to a network environment, and has a function to transmit and receive data between various terminals via the data transfer I/F 305. The server computer 3000 also has a function to edit or process received data.

(Printer 4000)

In Fig. 2, the printer 4000 has a data transfer I/F 401, a printer controller 402, and a printer engine 403. The data transfer I/F 401 controls data transmission and reception between the client computer 1000, the mobile terminal 2000, the server computer 3000 or the information collection server computer 5000 via the router 1200. The printer 4000 receives print data generated by the client computer 1000, the mobile terminal 2000 or the server computer 3000. The print data mainly includes image data used for printing and print setting data for issuing print instructions.

The printer controller 402 controls the printer engine 403 based on the received print data. The printer controller 402 also converts image data by performing color space conversion processing required for printing and color separation processing on color materials according to the type of paper specified in the print setting data. The printer controller 402 also converts the image data into print data that can be printed, by performing image processing such as output tone correction and halftoning using image processing parameters such as a look-up table.

The printer engine 403 executes print processing based on the print data. For example, the printer engine 403 controls heating and pressure operations of a heater mounted on a print head based on the print data to eject ink.

(Information Collection Server Computer 5000)

In Fig. 2, the information collection server computer 5000 has a CPU 501, a ROM 502, a RAM 503, an external storage unit 504, and a data transfer I/F 505. The CPU 501 performs the same processing as the CPU 101. The ROM 502 has the same functions as the ROM 102. The RAM 503 has the same functions as the RAM 101. The external storage unit 504 is the same as the external storage unit 104. The data transfer I/F 505 controls data transmission and reception between the client computer 1000, the mobile terminal 2000, the server computer 3000 or the printer 4000 via the router 1200.

The information collection server computer 5000 is mainly connected to a network environment, and has a function to transmit and receive data to and from various terminals via the data transfer I/F 505. The information collection server computer 5000 also has a function to aggregate or process received data.

Note that the configuration shown in Fig. 2 is merely an example, and the present disclosure is not limited to this example. The information processing system does not have to include some of the configuration shown in Fig. 2, or may include other configurations, in addition to the configuration shown in Fig. 2.

(1-2) Software Configuration

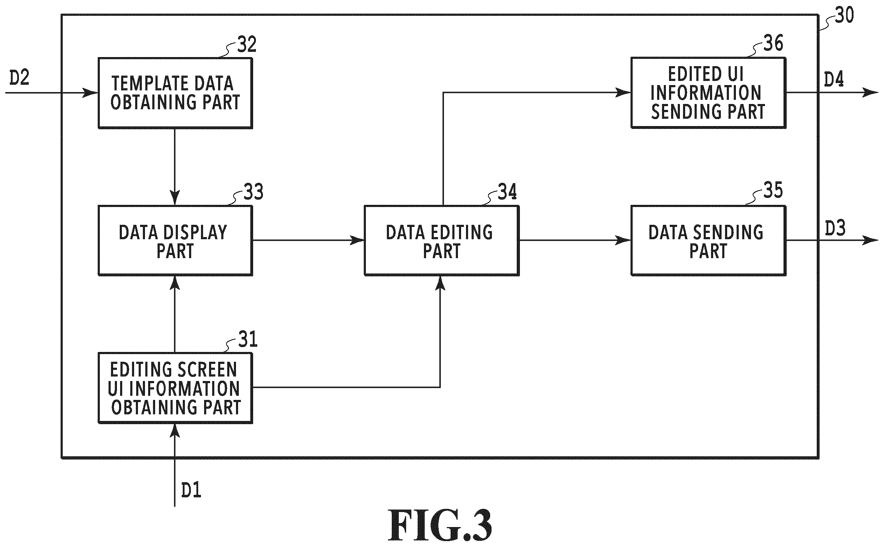

Fig. 3 is a diagram showing an example of a software configuration used in the information processing system according to the present embodiment. A contents editing application described in the present embodiment is an application for designing a poster, a photo album, photo layout, and the like by placing an object such as an image or text in an editing region on a screen. The contents editing application according to the present embodiment is applicable to general layout software such as a poster editing application, a photo album editing application or an object layout application. In the present embodiment, the poster editing application, which is a Web application, will be described as a specific example of the contents editing application. The contents editing application may be a native application installed in the client computer 1000 or the mobile terminal 2000. Alternatively, the contents editing application may also be a Web application that runs on the server computer 3000. In the present embodiment, the contents editing application is a Web application, and the client computer 1000 or the mobile terminal 2000 is configured to send a processing instruction to the Web application that runs on the server computer. For ease of explanation, the following description will be given assuming that the client computer 1000 receives an editing operation of the contents editing application. However, the client computer 1000 in the following description may be replaced with the mobile terminal 2000.

A brief overview of the configuration of a Web application will be given below. Here, an example of using a Web browser in the client computer 1000 will be described. In a case of executing a Web application, the client computer 1000 first receives a client program that constitutes a part of the Web application from the server computer 3000. Next, a program analysis unit of the Web browser interprets and executes the client program (a script language such as HTML or JavaScript) to start the Web application. To start the Web application, a URL for starting the Web application is inputted to the Web browser. More specifically, as the URL is inputted to the Web browser, the server computer 3000 sends the client program constituting a part of the Web application to the Web browser. The Web browser receives the client program from the server computer 3000 and executes the client program to start the Web application. That is, the Web application is executed by the Web browser issuing, through the client program, an instruction to execute a server program executed by the CPU 301 of the server computer 3000. More specifically, the Web browser is configured to output the instruction to execute the server program to the server computer 3000 and display the processing result of the server program.

Fig. 3 shows a configuration example of software (contents editing application program) in the client computer 1000. That is, Fig. 3 shows a configuration example of the client program described above. In the present embodiment, various functions in the application program will be described for each functional component. A functional component shown in Fig. 3 is referred to as a first functional component 30. The first functional component 30 mainly performs template data editing processing to edit template data using a user interface (UI) screen. Here, an example of editing contents using a template will be described.

The first functional component 30 includes an editing screen UI information obtaining part 31, a template data obtaining part 32, a data display part 33, a data editing part 34, a data sending part 35, and an edited UI information sending part 36.

The editing screen UI information obtaining part 31 is a processing part configured to obtain editing screen UI information D1 to be displayed on an editing screen via the data transfer I/F 105. The editing screen UI information obtaining part 31 obtains the editing screen UI information D1 from the server computer 3000, for example. The editing screen UI information D1 is information indicating template layout information for selecting a template, the type and layout information of a button having an editing function to edit the selected template, and the like.

The template data obtaining part 32 is a processing part configured to obtain template data D2 via the data transfer I/F 105. The template data obtaining part 32 receives the template data D2 from the server computer 3000, for example. The template data D2 is data constituting various templates such as a poster or a business card. In the contents editing application according to the present embodiment, various templates prepared in advance can be used to create and edit contents. The template data obtaining part 32 obtains data for displaying a predetermined Web page, such as HTML (Hyper Text Markup Language), for example, as the template data D2. The template data obtaining part 32 may also obtain so-called bitmap image data, which is compressed and converted into an image file, such as JPEG (Joint Photographic Experts Group), as the template data D2. Alternatively, the template data obtaining part 32 may also obtain so-called vector image data, such as an SVG (Scalable Vector Graphics) file, as the template data D2. The template data D2 may be any data that constitutes a template. Editing can also be performed without using the template data D2. In this case, the template data obtaining part 32 may obtain preset blank template data.

The data display part 33 displays contents data that is editing target contents, based on the editing screen UI information D1 obtained by the editing screen UI information obtaining part 31 and the template data D2 obtained by the template data obtaining part 32.

The data editing part 34 uses the editing screen UI information D1 obtained by the editing screen UI information obtaining part 31 to edit the contents data (template data) displayed by the data display part 33. That is, the data editing part 34 edits the editing target contents data. For example, the data editing part 34 receives a user instruction and edits the editing target contents data based on the received user instruction. The data editing part 34 can also edit the editing screen UI information D1. Furthermore, the data editing part 34 can also edit the editing target contents data by receiving a user instruction using a UI based on the editing screen UI information D1 edited. The editing of the editing screen UI information D1 will be described in detail later.

The data sending part 35 is a processing part configured to transmit edited contents data D3, which is contents data edited by the data editing part 34. For example, the data sending part 35 sends the edited contents data D3 from the client computer 1000 to the server computer 3000 via the data transfer I/F 105.

The edited UI information sending part 36 is a processing part configured to transmit edited UI information D4, which is the editing screen UI information D1 edited by the data editing part 34. For example, the edited UI information sending part 36 sends the edited UI information D4 to the information collection server computer 5000 via the data transfer I/F 105.

Each part of the first functional component 30 is realized by the CPU 101 of the client computer 1000 executing the contents editing application program read into the RAM 103. That is, each part of the first functional component 30 is realized by the CPU 101 functioning as each part of the first functional component 30. As described above, the contents editing application program may be stored in the ROM 102, or may be obtained from the server computer 3000 by the Web browser.

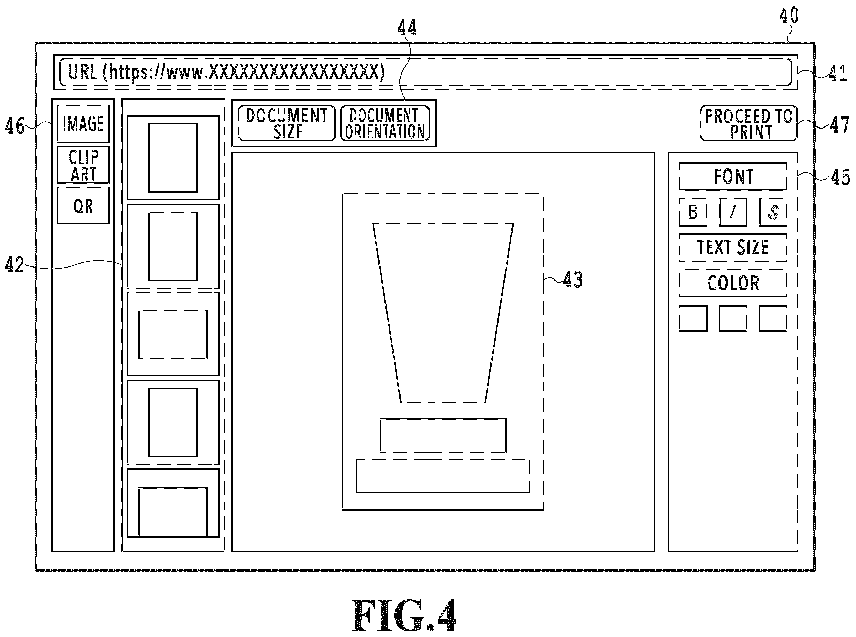

Fig. 4 is a diagram showing an example of the editing screen of the contents editing application. An editing screen 40 in Fig. 4 is a screen displayed on the display device 110. The processing of each part of the first functional component 30 will be described below with reference to Fig. 4.

Fig. 4 is a diagram illustrating a UI configuration for receiving selection of a template and displaying and editing the selected template in the contents editing application. In Fig. 4, for example, the editing screen 40 is displayed on the display device 110 by the Web browser running on the client computer 1000. The editing screen 40 has a URL display 41, a template selection UI 42, an editing target UI 43, a layout change UI 44, a contents editing UI 45, an object addition UI 46, and a proceed to print button 47.

The URL display 41 displays a URL (Uniform Resource Locator), which is a Web page address where the editing screen UI information D1 used to display the editing screen 40 is saved. In a case where a user selects a template through the template selection UI 42 to be described later, for example, an address corresponding to the selected template is displayed. The editing screen UI information obtaining part 31 receives the editing screen UI information D1 according to the URL address displayed.

The template selection UI 42 is a UI for displaying the template data D2 received from the server computer 3000. The template selection UI 42 is a UI capable of receiving the selection of one or more templates from the user. For example, the template selection UI 42 displays a thumbnail image and a template name of the template obtained. The template data obtaining part 32 receives the template data D2 received from the server computer 3000.

The editing target UI 43 is a UI for editing the template selected by the user through the template selection UI 42. The contents displayed in the editing target UI 43 is referred to as editing target contents. Here, the template displayed in the editing target UI 43 to perform editing using the template is also referred to as an editing target template.

The editing target contents include various independent objects. For example, a template is also one of the objects. Moreover, a template may include respective objects constituting the template. For example, the editing target template may include various types of objects such as a character object, a background object, or a graphic object. As described later, the user can also add a desired object to the editing target contents (editing target template) through the object addition UI 46. For example, the user can add clip art as an object to the editing target contents. The clip art includes objects constituting the clip art (for example, a character object or a background object). In the present embodiment, the object is thus a general term for components constituting the editing target contents. In the object addition UI 46 and the template selection UI 42, a constituent object displayed to be selected by the user is referred to as a material. In other words, the material is also a type of object. As a material is added to the editing target UI 43, the material is added as an object to the editing target contents.

The data display part 33 individually receives the selection of each object constituting the editing target template selected by the user, and displays on the editing screen 40 a UI capable of individually editing each object using various editing functions. As each object constituting the editing target template is selected, the data display part 33 displays a UI (contents editing UI 45) for activating editing and also highlights the selected object.

The layout change UI 44 is a UI for changing the overall layout settings of the editing target template displayed in the editing target UI 43. For example, the layout change UI 44 handles the editing target template as one piece of document information, and can make layout-related changes, such as document size, document aspect ratio, and document orientation.

The content editing UI 45 is a UI for editing the editing target template (editing target contents) displayed in the editing target UI 43. The content editing UI 45 is not displayed at the timing when the editing screen 40 is displayed. As the user receives the selection of an object placed in the editing target template or an object added to the editing target template, the contents editing UI 45 is displayed as a UI according to the type of the corresponding object. If the type of the selected object is a character object, for example, a UI for changing the font of the character and a UI for changing the color and size of the character are displayed. If the type of the selected object is a graphic object, on the other hand, a UI for changing the color and size of the graphic is displayed. In the contents editing UI 45, any known UI can be used as long as the UI allows editing from a plurality of options, such as a radio button, a checkbox or a drop-down list. As will be described later, a color palette for changing the color of an object is also included in the contents editing UI 45. The data editing part 34 receives a user operation through the contents editing UI 45, and edits the editing target contents based on the received user instruction. Note that the above description is given of the example where the contents editing UI 45 is not displayed at the timing when the editing screen 40 is displayed. However, a predetermined contents editing UI 45 may be displayed at the timing when the editing screen 40 is displayed or as the template is selected in the template selection UI 42.

The object addition UI 46 is a UI for adding an object to the editing target contents displayed in the editing target UI 43. As described above, the constituent object included in the object addition UI 46 is referred to as a material. The material used in the object addition UI 46 may be, for example, an image stored in the client computer 1000 or the mobile terminal 2000. The material may be a clip art image prepared in the server computer 3000 or another server on the cloud. The material may be a graphic object. The material may be a two-dimensional code (for example, a QR code (registered trademark)) created by receiving a text input such as a URL from the user and automatically encoding the received information. The object addition UI 46 may be any type of UI as long as the UI can be used to add a material as an object to the editing target template. The data editing part 34 performs processing of adding an object to the editing target template, based on a user operation using the object addition UI 46.

The proceed to print button 47 is a print button for printing the data of the editing target contents displayed in the editing target UI 43. Specifically, the proceed to print button 47 is a print button for transmitting the edited contents data D3 after completion of editing to a processing part for print processing or a printing application. For example, the edited contents data D3 is data including vector data such as HTML or SVG, or raster image data such as JPEG or PNG. The data sending part 35 sends the edited contents data D3 to the server computer 3000. The edited UI information sending part 36 sends the edited UI information D4 after completion of editing by the data editing part 34 to the information collection server computer 5000. For example, as described later, there is a configuration in which a color palette is edited and the edited contents are saved as a file. The information collection server computer 5000 is a representative definition of a server configured to save various data including such files and the like. The edited UI information D4 is sent to the information collection server computer 5000, based on an instruction from the user.

In the present embodiment, the description is given of the example where the contents editing application is the Web application. However, as described above, the contents editing application may be a native application installed in the client computer 1000. In the case of a native application, the editing screen 40 shown in Fig. 4 may be changed as appropriate. For example, the URL display 41 does not have to be displayed.

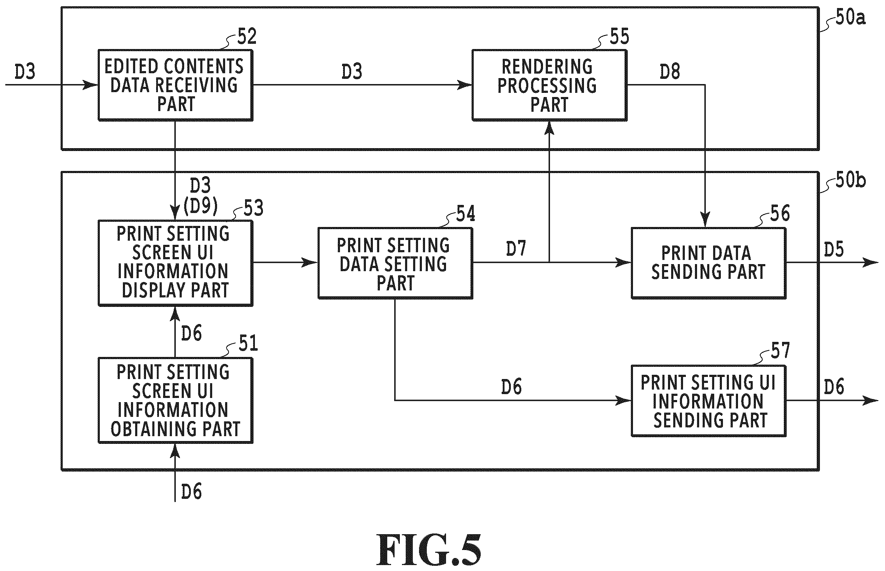

Fig. 5 is a diagram showing an example of a software configuration of a print system for printing according to the present embodiment. The software of the print system may be integrated with the contents editing application, or may be provided separately from the contents editing application. In the present embodiment, description will be given of an example where the software of the print system is provided separately from the contents editing application. The description is also given, as an example, of a configuration in which the software of the print system uses both the functional component of the client computer 1000 (or the mobile terminal 2000) and the functional component of the server computer 3000. Fig. 5 shows an example where a second functional component 50a is executed by the server computer 3000, and a third functional component 50b is executed by the client computer 1000. The software of the print system sends print data D5 to the printer 4000, and the printer 4000 executes print processing. Note that, although the second functional component 50a and the third functional component 50b are described here as being realized by separate devices, both functional components may be realized by the same device.

The second functional component 50a includes an edited contents data receiving part 52 and a rendering processing part 55. The third functional component 50b includes a print setting screen UI information obtaining part 51, a print setting screen UI information display part 53, a print setting data setting part 54, a print data sending part 56, and a print setting UI information sending part 57.

The edited contents data receiving part 52 in the second functional component 50a is a processing part configured to obtain the edited contents data D3 from the client computer 1000.

The print setting screen UI information obtaining part 51 in the third functional component 50b is a processing part configured to obtain print setting UI information D6 to be displayed on the print setting screen, from the server computer 3000. The print setting screen UI information display part 53 in the third functional component 50b receives and displays the edited contents data D3 from the edited contents data receiving part 52. The print setting screen UI information display part 53 is also a processing part configured to switch the display of print settings according to the print setting UI information D6 to be displayed on the print setting screen obtained by the print setting screen UI information obtaining part 51.

The print setting data setting part 54 in the third functional component 50b performs print setting based on UI operations for various print settings displayed in the print setting screen UI information display part 53. The print setting data setting part 54 sends print setting information D7 obtained by the print setting to the rendering processing part 55. The print setting information D7 is also sent to the print data sending part 56. The print setting data setting part 54 sends print setting UI information D6 including the setting information obtained by the print setting to the print setting UI information sending part 57.

The rendering processing part 55 in the second functional component 50a obtains the edited contents data D3 from the edited contents data receiving part 52. The rendering processing part 55 also obtains the print setting information D7 from the print setting data setting part 54. The rendering processing part 55 is a processing part configured to perform rendering processing to convert the edited contents data D3 into print image data D8, based on the edited contents data D3 and the print setting information D7. The rendering processing part 55 converts the print image data D8 into an image file in a compressed format such as JPEG or PNG, and sends the image file to the print data sending part 56.

The print data sending part 56 in the third functional component 50b obtains the print image data D8 from the rendering processing part 55. The print data sending part 56 generates print data D5 by converting the received print image data D8 into a sending format for the printer 4000 selected for printing. The print data sending part 56 sends the print data D5 to the printer 4000 for print processing.

The print setting UI information sending part 57 in the third functional component 50b obtains the print setting UI information D6 from the print setting data setting part 54. The print setting UI information sending part 57 sends the print setting UI information D6 to the information collection server computer 5000.

Each part of the second functional component 50a is realized by the CPU 301 of the server computer 3000 executing a program of the print system read into the RAM 303, and functioning as each part of the second functional component 50a. Each part of the third functional component 50b is realized by the CPU 101 of the client computer 1000 executing a program of the print system read into the RAM 103, and functioning as each part of the third functional component 50b.

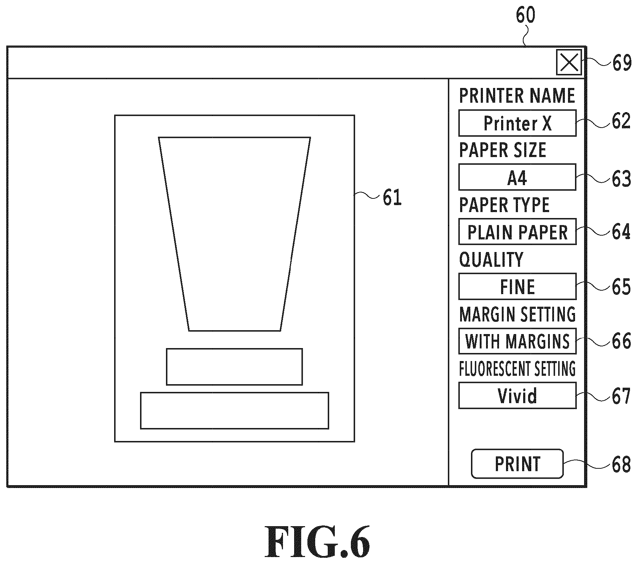

Fig. 6 is a diagram showing an example of a screen of a printing application according to the present embodiment. In this example, the third functional component 50b is a printing application executed in the client computer 1000. That is, Fig. 6 shows an example of a screen of a printing application executed in the client computer 1000. Fig. 6 shows an example of a print setting screen 60 displaying the edited contents data D3 and including a UI capable of receiving print settings from the user and also receiving a print instruction.

The printing application is installed in the client computer 1000. The print setting screen 60 displays a contents display region 61, a printer setting UI 62, a paper size setting UI 63, a paper type setting UI 64, a print quality setting UI 65, a margin setting UI 66, and a fluorescent setting UI 67. The print setting screen 60 also has a print execution button 68 and a printing application end button 69.

The following image is displayed in the contents display region 61. First, the edited contents data receiving part 52 of the server computer 3000 obtains the edited contents data D3. The edited contents data receiving part 52 converts the obtained edited contents data D3 into printing application display data D9 that can be displayed in the printing application. For example, the edited contents data receiving part 52 performs rendering processing on the obtained edited contents data D3 to create a JPEG or PNG image. The edited contents data receiving part 52 sends the printing application display data D9 to the print setting screen UI information display part 53 of the client computer 1000. The print setting screen UI information display part 53 displays the printing application display data D9 in the contents display region 61. If the edited contents data D3 is data already converted into an image, the edited contents data D3 is displayed in the contents display region 61.

The printer setting UI 62, the paper size setting UI 63, the paper type setting UI 64, the print quality setting UI 65, the margin setting UI 66, and the fluorescent setting UI 67 are print setting UIs. The print setting information D7 set in the various print setting UIs may include, for example, printer model information related to creation of print image data, feed method, paper size, paper type, print quality, margin setting information, double-side printing, binding direction, and paper orientation.

The print setting screen UI information display unit 53 receives print setting UI information D6 to be displayed on the print setting screen from the server computer 3000, and the printing application displays each print setting UI based on the print setting UI information D6. The print setting data setting unit 54 selects each print setting UI. The print setting data setting unit 54 selects each print setting UI based on a user operation. Each print setting UI may be automatically changed depending on the printer selected as the printing target.

The printer setting UI 62 is a UI for selecting a printer from the printer name corresponding to a printer driver pre-installed in the client computer 1000, or the printer name of a printer connected via a communication I/F of a terminal.

The paper size setting UI 63 is a UI for selecting a paper size available on the connected printer. For example, the paper size is A4, Letter, L size, and business card size. The paper type setting UI 64 is a UI for selecting a paper type available on the connected printer. For example, the paper type is plain paper, glossy paper, or matte paper. The print settings are made according to the selected paper type before printing.

The print quality setting UI 65 is a UI for selecting print quality available on the connected printer. For example, the print quality is "Standard", "Fine", and the like. "Standard" results in a standard quality finish, and "Fine" results in a higher quality finish. The margin setting UI 66 is a UI for selecting a margin setting available on the connected printer. For example, the margin setting can be selected between "with margins" or "marginless". If "with margins" is selected, printing is performed to fit the inner region of the paper size. If "marginless" is selected, printing is performed up to the outer region of the paper size. The fluorescent setting UI 67 is a UI for selecting printing using fluorescent ink available on the connected printer. For example, the fluorescent setting UI 67 is displayed if the selected printer supports fluorescent ink, and the fluorescent setting UI 67 is not displayed if not.

The print execution button 68 is a button for instructing the printer driver or printer to execute printing. For example, if the print execution button 68 is pressed by the user, the print setting information D7, such as printer model information and various print settings related to creation of the print image data, is sent to the rendering processing part 55 of the server computer 3000. The rendering processing part 55 generates print image data D8 using the edited contents data D3 received by the edited contents data receiving part 52 and the print setting information D7.

The rendering processing part 55 first calculates a printable region image size P1 using the edited contents data D3 and the print setting information D7. It is assumed, for example, that the width and height of the edited contents data D3 are 3000 pixels and 4000 pixels, respectively. It is also assumed that, in the print setting information D7, the width and height of a printable region P2 in a case where A4 paper size with margins is set are 4500 pixels and 6800 pixels, respectively. The width and height of the printable region P2 may be prestored in combination with the setting contents, or the size received from the printer 4000 may be used.

Next, the rendering processing part 55 calculates the size of the edited contents data D3 after enlargement or reduction, so that the data fits within the printable region P2. For example, the rendering processing part 55 calculates a size that fits within the width and height of the printable region P2, so that the ratio (aspect ratio) of the width and height of the edited contents data D3 does not change.

In the above specific example, the width and height of the edited contents data D3 are 3000 pixels and 4000 pixels, and the width and height of the printable region P2 are 4500 pixels and 6800 pixels. Therefore, the printable region image size P1 that fits within the width and height of the printable region P2 has the width of 4500 pixels and the height of 6000 pixels. The rendering processing part 55 generates print image data D8 including image data obtained by enlarging or reducing the edited contents data D3 so as to fit the printable region image size P1 thus calculated.

The printing application end button 69 is a button for ending the running printing application as the button is pressed. Although the application can be ended using a button such as the printing application end button 69, an end menu may be prepared in a menu, and the printing application may be ended as the end menu is pressed.

The print data sending part 56 converts the print image data D8 thus generated into a sending format for the selected printer to generate print data D5 and sends the print data D5 to the printer 4000 for printing. The print data D5 can be generated so that the print setting information D7 set by the print setting data setting part 54 and the print image data D8 become one print specification description file. The print specification description file is a format that can be mainly received by the printer driver. The printer driver converts the print image data D8 into a data format that is printable by the printer, according to the received print specification description file. Any known method can be used to create the print specification description file and execute printing by the printer. As the print button is pressed, the print setting UI information sending part 57 sends the received print setting UI information D6 to the information collection server computer 5000.

(2) Representative Configuration

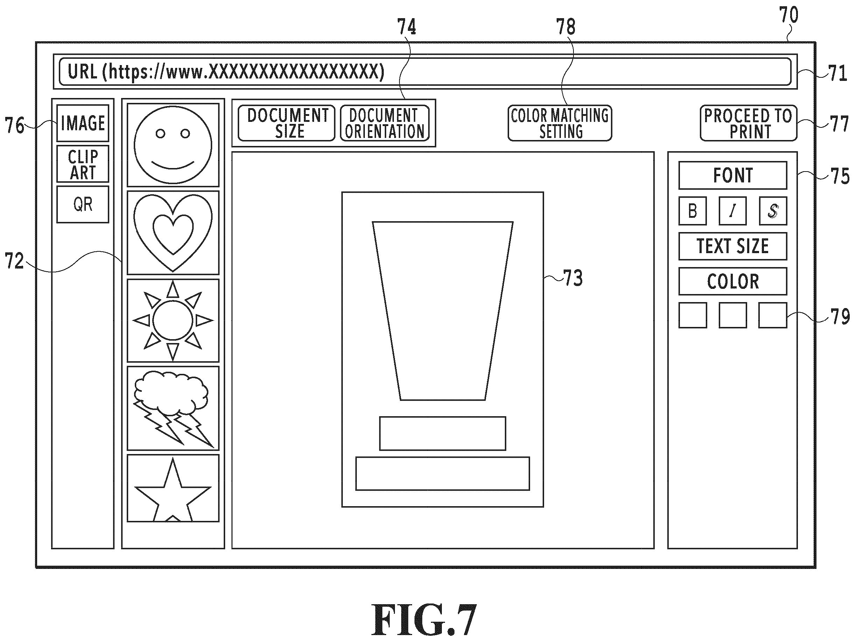

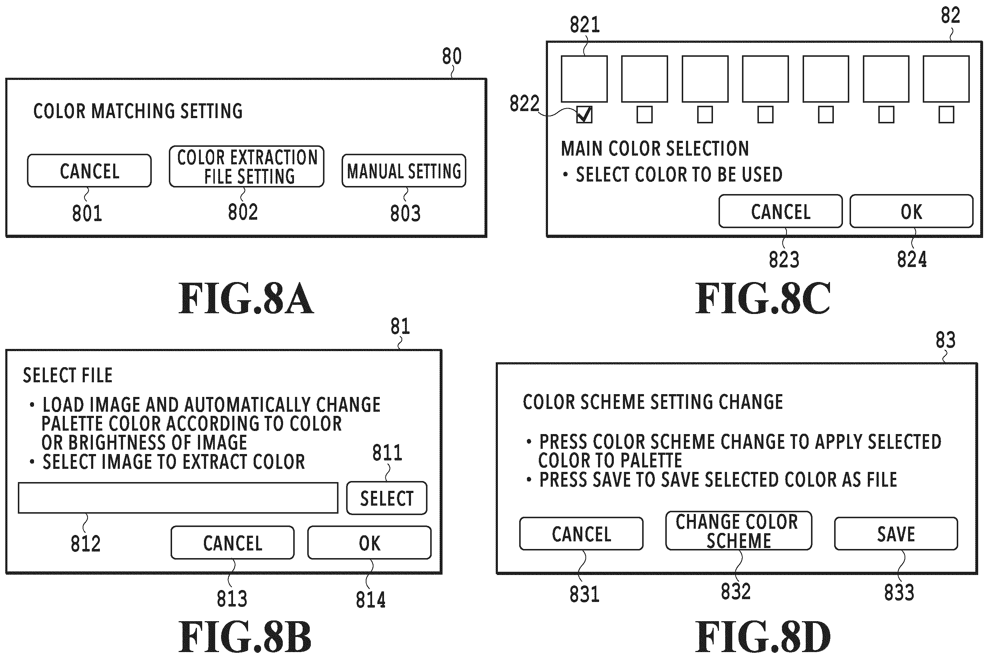

In the present embodiment, a representative configuration is included in the contents editing application that can run on the client computer 1000 (or the mobile terminal 2000) or the server computer 3000. The representative configuration of the present embodiment will be described with reference to Figs. 7 and 8.

Fig. 7 is a diagram showing an example of an editing screen of the contents editing application according to the present embodiment, as with Fig. 4. An editing screen 70 includes a URL display 71, an editing target UI 73, a layout change UI 74, a contents editing UI 75, an object addition UI 76, and a proceed to print button 77. This configuration is the same as that of the editing screen 40 shown in Fig. 4, including the URL display 41, the editing target UI 43, the layout change UI 44, the contents editing UI 45, the object addition UI 46, and the proceed to print button 47. Therefore, description thereof will be omitted. As with the editing screen 40, the editing screen 70 is also a screen displayed in a Web browser of the client computer 1000, for example. The editing screen 70 shows a state where a material selection UI 72 is displayed as a UI for selecting an image of a clip art material as an object is selected in the object addition UI 46. The contents editing UI 75 also includes a color palette 79 for changing the color of the object.

The material selection UI 72 is a UI for receiving clip art data D10 from the server computer 3000 and selecting one or more clip art pieces received. For example, the material selection UI 72 is a UI for placing the received clip art material so that it fits into a frame and receiving clip art selection from the user. The user places the selected clip art in the editing target UI 73 by dragging and dropping. This placement operation causes the clip art (material) selected by the user to be added and placed as an object in the editing target UI 73.

Various data of the clip art materials are composed of, for example, a plurality of SVG (Scalable Vector Graphics) parts data. A color is set for each piece of SVG parts data, and a single piece of clip art data is composed by combining the parts.

In the editing screen 70 in Fig. 7, a color matching setting button 78 is additionally provided, in comparison with the editing screen 40 in Fig. 4. The color matching setting button 78 is a button that can be one of the triggers for replacing the UI, so that the user can easily change to a desired color in a case of editing contents. For example, the color matching setting button 78 is a button for making it easier for the user to change to his/her Oshi's color in a case of editing contents.

Figs. 8A to 8D are diagrams each showing an example of a setting screen for color matching setting in the contents editing application. Each setting screen shown in FigA. 8A to 8D is displayed as a dialog on the screen of Fig. 7, for example. Note that the display form is not limited to such a dialog display, and any display form may be used. Each setting screen shown in Fig. 7 is a screen displayed based on a user operation via the editing screen 70.

As the color matching setting button 78 in Fig. 7 is pressed by the user, the contents editing application displays a color matching setting dialog 80 of Fig. 8A.

The contents editing application receives selection of a method for performing color matching setting in the color matching setting dialog 80 of Fig. 8A. If a cancel button 801 is pressed, the color matching setting is canceled. If a color extraction file setting button 802 is pressed, the contents editing application displays a file selection dialog 81 of Fig. 8B. If a manual setting button 803 is pressed, the contents editing application displays a main color selection dialog 82 of Fig. 8C.

First, an example of the file selection dialog 81 of Fig. 8B will be described. The file selection dialog 81 displays a message to the effect that an image is loaded and the palette color is automatically changed according to the color or brightness of the image, and a message that prompts selection of an image. The file selection dialog 81 includes a file selection button 811 for receiving selection of a file. The file selection button 811 is a button for receiving selection of a file saved in the client computer 1000 or the mobile terminal 2000. In the contents editing application, the file selection button 811 is pressed by the user in the file selection dialog 81 of Fig. 8B. If a color extraction file F1 is selected, for example, the selected color extraction file F1 is displayed in a file name display region 812. The color extraction file F1 is, for example, a JPEG or PNG image data file. If a file selection cancel button 813 is pressed, the contents editing application closes the file selection dialog 81. That is, the contents editing application returns to the display of the editing screen 70 in Fig. 7. If a file selection OK button 814 is pressed in a state where a file is displayed in the file name display region 812, the contents editing application displays the main color selection dialog 82 of Fig. 8C.

Next, the main color selection dialog 82 of Fig. 8C will be described. As the manual setting button 803 in Fig. 8A is pressed, a color display region 821 (palette) of the main color selection dialog 82 in Fig. 8C displays the colors prepared in advance as candidate colors in the order prepared in advance. Although Fig. 8C shows seven color display regions 821, the number thereof is not limited thereto.

On the other hand, if the file selection OK button 814 is pressed in the file selection dialog 81 of Fig. 8B, the main colors extracted from the selected color extraction file F1 are displayed in the color display region 821 of the main color selection dialog 82 in Fig. 8C. That is, as the color extraction file F1 is selected, the contents editing application automatically extracts the main colors from the color extraction file F1 based on an extraction method to be described later, rather than based on user's selection. The main colors are the main colors that make up the image. For example, the main color may be a color that has a relatively large number of pixels in an image. Alternatively, the main color may be the color of a main object (for example, a character object) that constitutes an image. A method for extracting a main color will be described later. The contents editing application assigns colors based on main color candidate data D11 extracted from the selected color extraction file F1 as candidate colors to one or more color display regions 821.

The main color selection dialog 82 includes a message that prompts the user to select a color to be used. A main color selection checkbox 822 is a checkbox to be checked (selected) for one or more candidate colors from among the candidate colors assigned to the color display regions 821. The contents editing application closes the main color selection dialog 82 if a main color selection cancel button 823 is pressed. If the main color selection OK button 824 is pressed, the contents editing application determines that the selected main color is main color selection data D12 included in the various UI color settings in Fig. 7. The main color selection data is stored in a memory such as the ROM 102, the RAM 103, or the external storage unit 104 of the client computer 1000 (or the mobile terminal 2000).

Next, a method for extracting a main color will be described. There are various methods for extracting a main color. Here, an example of extracting a main color using a histogram will be described. The contents editing application extracts RGB values (Red, Green, and Blue color information) of each pixel in image data contained in the selected color extraction file F1. The R, G, and B values are each composed of a combination of values from 0 to 255, for example. The contents editing application scans an image to generate a histogram by calculating the total number of pixels in the image data for each combination of R, G, and B values.

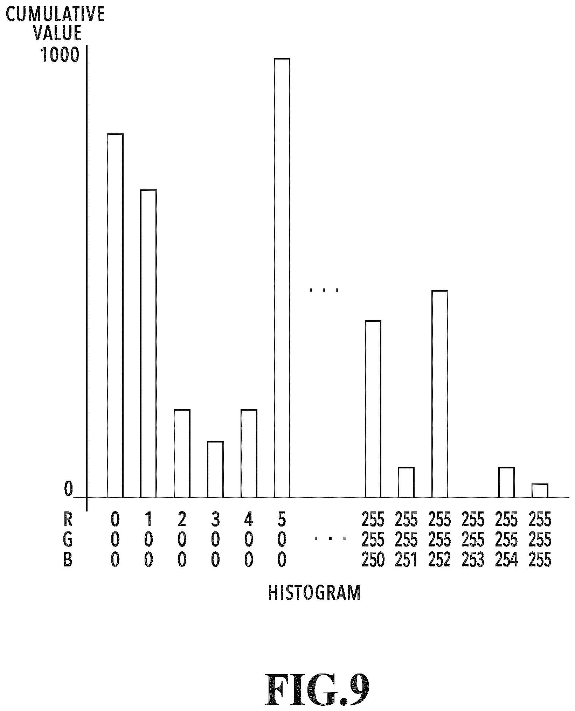

Fig. 9 is a diagram showing an example of the result of generating a color histogram from image data. From the calculated histogram, a color with a higher value of a more frequent combination of R, G, and B values is extracted as the main color.

Another example will be described. The contents editing application may extract a main color using the well-known k-means method. The k-means method is a method of classifying data into a given number of clusters using a non-hierarchical clustering algorithm. It is assumed, for example, that R, G, and B are values in a three-axis color space, each having a value between 0 and 255. Then, an image is scanned and the RGB values of pixels in the image data are placed in the color space.

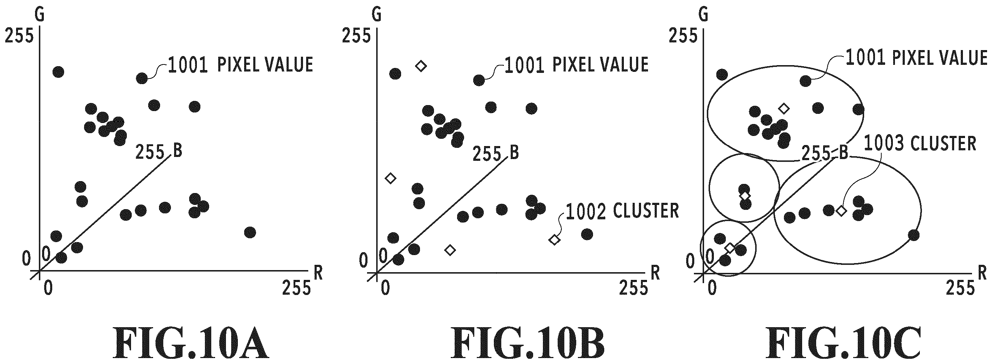

Figs. 10A to 10C are diagrams for explaining an example of extracting a main color using an RGB color space. Fig. 10A is an image diagram showing a state where pixels in image data are placed in an RGB color space. Fig. 10A shows a state where pixel values of the image data are placed in the color space, each of the pixel values being indicated by each black dot 1001. The contents editing application randomly defines a plurality of clusters 1003 in the defined color space. Fig. 10B is an image diagram showing a state where the pixels in the image data are placed in the RGB color space, and a plurality of clusters are also placed. Diamonds 1002 correspond to the clusters placed. The contents editing application calculates the distance in the color space between the values of each arranged pixel for each cluster, thus calculating the closest cluster for each pixel. The contents editing application finds a centroid value of the pixels gathered around that cluster. The contents editing application extracts the centroid value as the main color. Fig. 10C is an image diagram showing a state where the pixels in the image data are placed in the RGB color space, and the clusters are further rearranged at the positions of the centroid values of the pixels gathered around the clusters. In the k-means method, the centroid values of the clusters in the color space are determined by further repeating the process of changing the number of clusters and calculating the centroid values, thereby extracting the main colors. Any method can thus be used to extract the main colors from the color extraction file.

The colors thus extracted are placed in the color display region 821 as candidate colors. The user checks the main color selection checkbox 822 of the color to be used from among the candidate colors thus placed, and then presses the main color selection OK button 824. In this case, the color with the main color selection checkbox 822 checked is used as the main color selection data D12 in processing to be described later.

In the present embodiment, description is given of an example where the user selects a main color from among the extracted main colors (candidate colors) in the main color selection dialog 82 of Fig. 8C. However, the present disclosure is not limited to this example. For example, after the file selection OK button 814 is pressed in the file selection dialog 81 of Fig. 8B, data obtained by the contents editing application automatically extracting the main color from the selected contents file may be used as the main color selection data D12.

Although the description has been given of the example where the color extraction file F1 is a JPEG or PNG image data file, so-called vector image data such as an SVG file may also be used. The SVG file is a text-based file, and colors can be defined for each piece of information such as points or lines contained in text. In a case of extracting colors from such vector image data, frequently used color information among the defined colors may be extracted. Alternatively, the contents editing application may convert the SVG into a bitmap image and then extract colors in the same manner as the image data file described above. For example, the color extraction file F1 may be data for displaying on a Web page such as HTML or CSS. Although the above description is given of the example where a file in the device is selected in the file selection dialog 81 of Fig. 8B, for example, a URL may be inputted. For example, the contents editing application receives input of the address of a page to be retrieved. The contents editing application may then receive data such as HTML of the inputted address. HTML or CSS data also has text-based files, and colors may be defined in information set in text. The color extraction file F1 may be an image data file of an object imaged with a camera, for example, or an image data file of an object scanned with a scanner.

An example where the color extraction file F1 is an HTML file will be described below. An example of the HTML file is as follows.

```
<!DOCTYPE html>
<html>
  <head>
    <meta charset="UTF-8">
    <title>Hello</title>
  </head>
  <body>
    <p>Hello!</p>
    <h1><font color="red">Red</font></h1>
    <h2 style="color:blue">Blue</h2>
    <p style="color:green">Green</p>
    <span style="color:brown">Brown</span>
    <span style="color:blue">Blue</span>
  </body>
</html>
```

In a case of extracting colors, frequently used color information may be extracted among the colors defined with the color tags in the HTML file. Alternatively, colors may be extracted in the same way as an image data file by generating image data by capturing HTML or CSS data displayed on a browser. The color extraction file F1 may thus store any data as long as it is a file that can be used to obtain main color information configured in the file from the obtained file.

If the main color selection OK button 824 is pressed in a state where the main color selection checkbox 822 is checked in the main color selection dialog 82 of Fig. 8C, the contents editing application displays a color scheme setting change dialog 83 of Fig. 8D.

The color scheme setting change dialog 83 of Fig. 8D displays a message suggesting pressing "Change Color Scheme" if the selected color is to be applied to the palette, and a message suggesting pressing "Save" if the selected color is to be saved as a file.

If a "Cancel" button 831 is pressed in the color scheme setting change dialog 83 of Fig. 8D, the contents editing application closes the color scheme setting change dialog 83. If a "Change Color Scheme" button 832 is pressed, the contents editing application changes the various UI color settings in Fig. 7, based on the main color selection data D12 selected in the main color selection dialog 82 in Fig. 8C.

Specifically, as the "Change Color Scheme" button 832 is pressed, the contents editing application of the present embodiment changes the color settings of the display colors in the color palette 79 of the contents editing UI 75 among the various UIs in Fig. 7. For example, if there are three display colors in the color palette 79 and three pieces of main color selection data D12, the contents editing application replaces the three main colors with the display colors in the color palette 79. On the other hand, if there are three display colors in the color palette and one piece of main color selection data D12, the contents editing application replaces one of the main colors with the display color in the color palette 79. In this case, the remaining two colors may be hidden, or only the first color may be replaced. Alternatively, the remaining two colors in the color palette 79 may be replaced with colors close to the main color. Alternatively, these settings may be configured to be switchable. If the number of pieces of main color selection data D12 is greater than the number of display colors in the color palette, such as a case where the color palette 79 has three display colors and there are five pieces of main color selection data D12, the display may be changed in descending order of priority among the main color selection data D12. For example, in a case of extracting colors from the color extraction file F1, the priority may be set so that more frequent colors have higher priority. The contents editing application may also set the priority based on a user operation using the main color selection dialog 82 of Fig. 8C or the like. Alternatively, if the number of colors in the main color selection data D12 is greater than the number of display colors in the color palette 79, the number of display colors in the color palette 79 may be increased and displayed. Any configuration may be used as long as the color scheme settings of various UIs can be changed based on the main color selection data D12. An example of changing the color of an object using the changed color palette 79 will be described later.

If a "Save" button 833 is pressed in the color scheme setting change dialog 83 of Fig. 8D, the contents editing application saves the main color selection data D12 as a color scheme setting save file F2. The color scheme setting save file F2 may be saved in the client computer 1000 or in the information collection server computer 5000. The color scheme setting save file F2 is, for example, a text file, a JSON (JavaScript Object Notation) file or the like. The color scheme setting save file F2 is saved as a file in a state where the main color selection data D12 is linked to an arbitrarily assigned registration number. The color scheme setting save file F2 may be saved in any form as long as the main color selection data D12 is saved in a reusable state in color scheme setting registration processing to be described later.

In the present embodiment, the main color selection data D12 and the arbitrarily assigned registration number are given as an example of data contained in the color scheme setting save file F2. However, the present disclosure is not limited thereto. For example, the registration number may be changed to a name that can be recognized by the user, and a resultant value may be registered as the registration number.

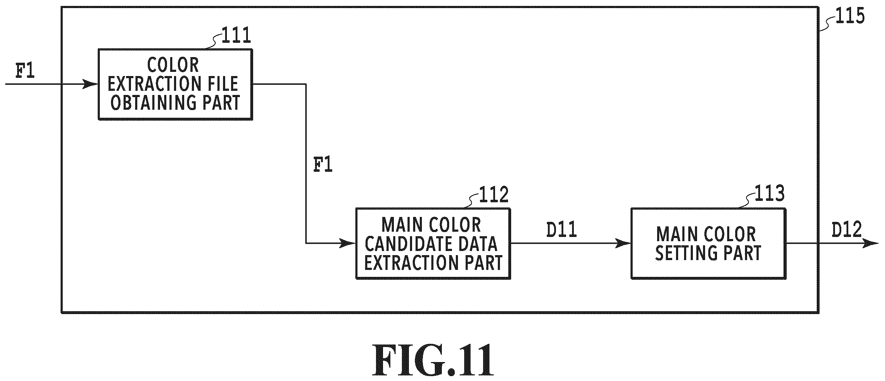

Fig. 11 is a diagram showing a software configuration of a fourth functional component 115 for setting a main color from a contents file obtained in the contents editing application according to the present embodiment. In the present embodiment, an example where the fourth functional component 115 is implemented by the server computer 3000 will be described. However, the fourth functional component 115 may also be implemented by the client computer 1000 (or the mobile terminal 2000). The fourth functional component 115 includes a color extraction file obtaining part 111, a main color candidate data extraction part 112, and a main color setting part 113.

Each part of the fourth functional component 115 is realized by the CPU 301 of the server computer 3000 executing the contents editing application program read into the RAM 103. That is, each part of the fourth functional component 115 is realized by the CPU 301 functioning as each part of the fourth functional component 115.

The color extraction file obtaining part 111 is a processing part configured to obtain the color extraction file F1. The main color candidate data extraction part 112 is a processing part configured to extract main color candidate data D11 from the color extraction file F1 obtained by the color extraction file obtaining part 111. The main color setting part 113 is a processing part configured to determine one or more main colors from the main color candidate data D11 extracted by the main color candidate data extraction part 112 and set the colors as main color selection data D12.

(2-1) Flowchart of the Present Embodiment

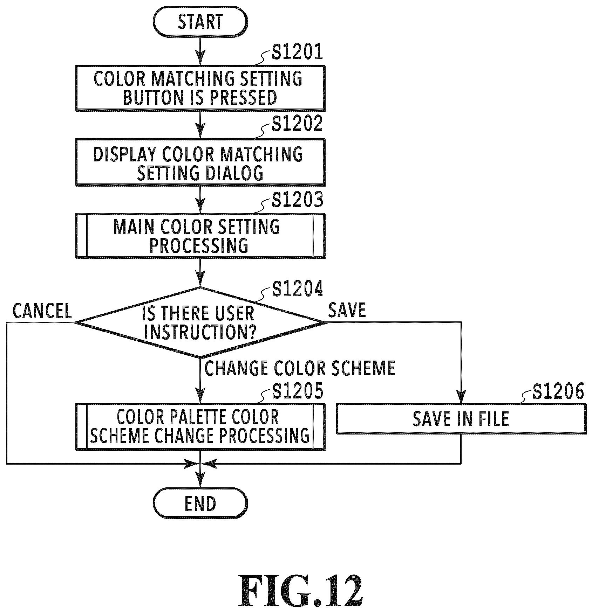

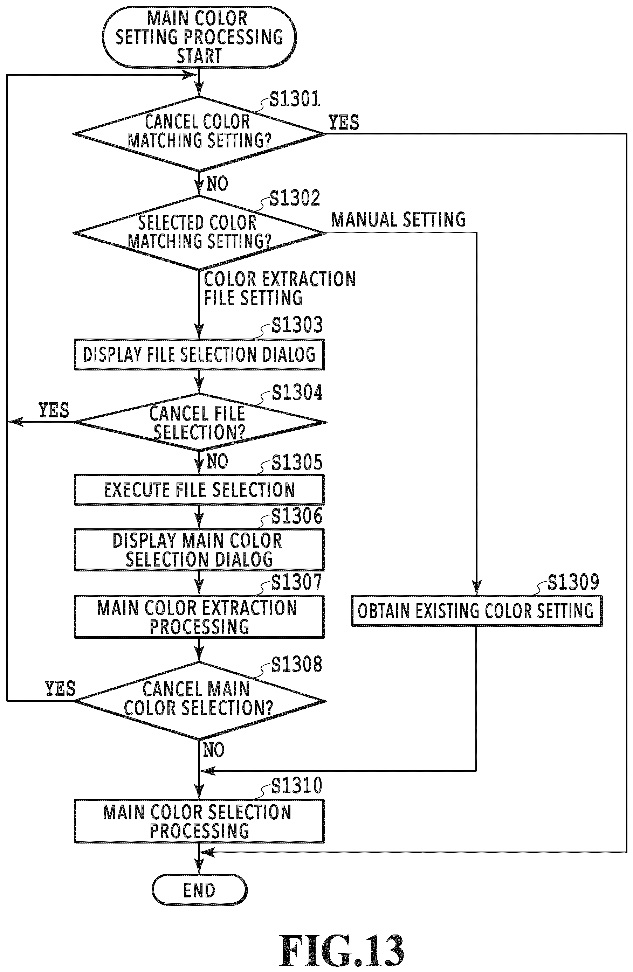

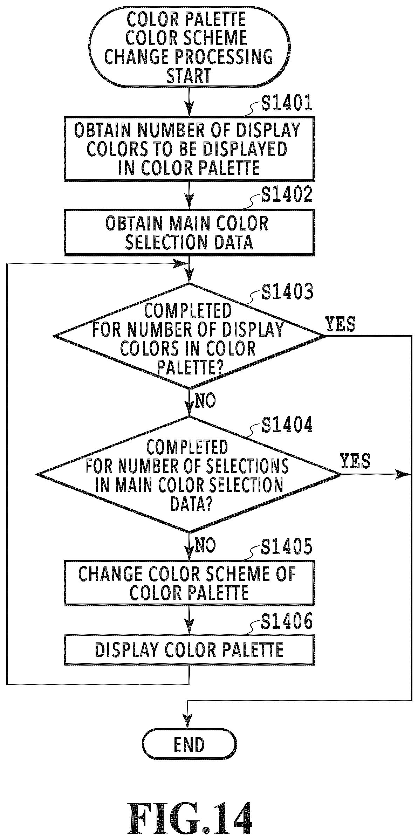

Figs. 12, 13, and 14 are flowcharts each showing an example of processing for setting color matching in the present embodiment. Fig. 12 is a flowchart of color palette display processing. Fig. 13 is a flowchart of main color setting processing. Fig. 14 is a flowchart of color palette color scheme change processing. The processing shown in Figs. 12 to 14 is realized by the CPU 101 reading and executing a client program stored in the ROM 102 or the like of the client computer 1000 into the RAM 103. More specifically, the processing of the flowcharts shown in Figs. 12 to 14 is executed by the CPU 101 of the client computer 1000 having a Web browser. That is, the CPU 101 of the client computer 1000 reads and executes a client program received from the server computer 3000 into the RAM 103. Therefore, the CPU 101 operating the Web browser executes the client program. As the client program is executed by the Web browser, the Web application provided by the server computer 3000 is executed through the Web browser. Some or all of the functions of the steps in Figs. 12 to 14 may be realized by hardware such as an ASIC or an electronic circuit. The symbol "S" in the description of each processing means a step in the sequence diagram (hereinafter, the same applies to the flowcharts in this specification).

Here, description will be given of an example where the processing of the flowcharts shown in Figs. 12 to 14 is executed by the client computer 1000. However, the processing may be executed by the server computer 3000. The processing may also be performed according to a program installed in the client computer 1000 as a native application, rather than in the form of a Web application.

Here, it is assumed that the editing screen 70 of Fig. 7 is displayed on the client computer 1000, and a UI for editing a poster as editing target contents is displayed. It is also assumed that a color extraction file F1 with which the user wants to match colors is prepared. The processing of the flowchart shown in Fig. 12 is started as the contents editing application receives pressing of the color matching setting button 78 in Fig. 7.

In S1201, the CPU 101 receiving pressing of the color matching setting button 78 in Fig. 7. That is, S1201 is a trigger to start the flowchart shown in Fig. 12. Next, in S1202, the CPU 101 displays the color matching setting dialog 80 of Fig. 8A. As described above, the color matching setting dialog 80 of Fig. 8A is displayed with the color matching setting cancel button 801, the color extraction file setting button 802, and the manual setting button 803.

In S1203, the CPU 101 then performs main color setting processing for changing the color schemes of various UIs. The main color setting processing will be described in detail later. Upon completion of the main color setting processing, the color scheme setting change dialog 83 of Fig. 8D is displayed.

Next, in S1204, the CPU 101 determines a user's instruction on the color scheme setting change dialog 83. If the user's instruction is to cancel, the CPU 101 ends the processing of the flowchart shown in Fig. 12. If the user's instruction is to change the color scheme, the CPU 101 proceeds to S1205.

In S1205, the CPU 101 changes the color schemes of various UIs, based on the main color selection data set in S1203. For example, the CPU 101 functioning as a contents editing application executes processing to change the display colors of the color palette 79 (color palette color scheme change processing). The CPU 101 then ends the processing of the flowchart shown in Fig. 12. The color palette color scheme change processing will be described in detail later.

If the user's instruction in S1204 is to save, the CPU 101 proceeds to S1206. In S1206, the CPU 101 saves the main color selection data set in S1203 in a file in association with an arbitrary registration number. The CPU 101 then ends the processing of the flowchart shown in Fig. 12.

Next, with reference to Fig. 13, the main color setting processing of S1203 will be described in detail. In S1301, the CPU 101 determines whether or not the color matching setting cancel button 801 displayed in the color matching setting dialog 80 of Fig. 8A is pressed. If it is determined that the color matching setting cancel button 801 is pressed, the CPU 101 ends the processing of the flowcharts shown in Figs. 13 and 12. More specifically, the CPU 101 interrupts the color matching setting processing and ends the display of the color matching setting dialog 80 before executing processing to return to the editing screen of Fig. 7.

If it is determined that the color matching setting cancel button 801 displayed in the color matching setting dialog 80 is not pressed, that is, if it is determined that the color extraction file setting button 802 or the manual setting button 803 is pressed, the CPU 101 proceeds to S1302.

In S1302, the CPU 101 determines what color matching setting has been selected. More specifically, the CPU 101 determines which one of the color extraction file setting button 802 and the manual setting button 803 displayed in the color matching setting dialog of Fig. 8A is selected. If it is determined in S1302 that the color extraction file setting button 802 is selected, the CPU 101 proceeds to S1303. On the other hand, if it is determined that the manual setting button 803 is selected, the CPU 101 proceeds to S1309.

In S1303, the CPU 101 displays the file selection dialog 81 of Fig. 8B. As described above, the file selection dialog 81 of Fig. 8B is displayed with the file selection button 811, the file name display region 812, the file selection OK button 814, and the file selection cancel button 813.

Next, in S1304, the CPU 101 determines whether the file selection cancel button 813 is pressed. If it is determined that the file selection cancel button 813 is pressed, the CPU 101 returns to S1301. More specifically, the CPU 101 interrupts the file selection and ends the display of the file selection dialog 81 before returning to the display of the color matching setting dialog 80 of Fig. 8A. If it is determined that the file selection cancel button 813 is not pressed, the CPU 101 proceeds to S1305. More specifically, the CPU 101 proceeds to S1305 if a file is selected by pressing the file selection button 811 in the file selection dialog 81 of Fig. 8B.

In S1305, the CPU 101 selects the color extraction file F1 specified by the user in the file selection dialog 81. The CPU 101 displays the selected color extraction file F1 in the file name display region 812. The CPU 101 proceeds to S1306 if the file selection OK button 814 is pressed.

In S1306, the CPU 101 displays the main color selection dialog 82 of Fig. 8C. Next, in S1307, the CPU 101 uses the main color extraction method described above to perform processing to extract main color candidate data D11 from the selected color extraction file F1. More specifically, the CPU 101 sends an instruction to the fourth functional component 115 of the server computer 3000 to extract main colors together with the color extraction file F1. Then, the CPU 101 assigns the main color candidate data D11 extracted by the main color candidate data extraction part 112 to the color display region 821 in the main color selection dialog 82 of Fig. 8C.

Next, in S1308, the CPU 101 determines whether the main color selection cancel button 823 is pressed. If it is determined that the main color selection cancel button 823 is pressed, the CPU 101 cancels the main color selection processing. More specifically, the CPU 101 interrupts the main color selection processing and ends the display of the main color selection dialog 82 before returning to the display of the color matching setting dialog 80 of Fig. 8A. If it is determined that the main color selection cancel button 823 is not pressed, the CPU 101 proceeds to S1310.

The processing of S1309 if the manual setting button 803 is selected in S1302 will now be described. In S1309, the CPU 101 uses a preset color (existing color) as the main color candidate data D11, and displays the color in the color display region 821 of the main color selection dialog 82 of Fig. 8C. The CPU 101 then proceeds to S1310.

In S1310, the CPU 101 uses the main color selection checkbox 822 to receive user's selection of a candidate color assigned in the color display region 821 of the main color selection dialog 82 of Fig. 8C. Upon receipt of pressing of the main color selection OK button 824 in the main color selection dialog 82 of Fig. 8C, the CPU 101 determines the candidate color checked in the main color selection checkbox 822 as the main color. More specifically, the CPU 101 sends an instruction to the main color setting part 113 of the server computer 3000 to set the determined main color. The CPU 101 then ends the processing of the flowchart shown in Fig. 13 and returns to the flowchart of Fig. 12. Note that if the main color selection cancel button 823 is pressed in the main color selection dialog 82 of Fig. 8C, the CPU 101 ends the display of the color matching setting dialog and executes processing to return to the editing screen of Fig. 7.

Next, the color palette color scheme change processing in Fig. 14 will be described. In S1401, the CPU 101 obtains the number of display colors to be displayed in the color palette 79 in the contents editing UI 75 among the various UIs in Fig. 7. In S1402, the CPU 101 obtains the main color selection data D12 set by the main color setting processing in S1203 of Fig. 12. The main color selection data D12 is data of one or more main colors selected.

In S1403, the CPU 101 determines whether or not processing is completed for the number of display colors in the color palette obtained. If the processing is completed for the number of display colors in the color palette, the CPU 101 ends the processing of the flowchart shown in Fig. 14. If the processing is not completed for the number of display colors in the color palette, the CPU 101 proceeds to S1404. In S1404, the CPU 101 determines whether or not processing is completed for the number of selections in the main color selection data obtained. If the processing is completed for the number of selections in the main color selection data, the CPU 101 ends the color palette color scheme change processing. If the processing is not completed for the number of selections in the main color selection data, the CPU 101 proceeds to S1405.

In S1405, the CPU 101 performs color scheme change processing to change the display colors of the color palette 79 in the contents editing UI 75 of Fig. 7 to the main color selection data. Next, in S1406, the CPU 101 displays the color palette 79 with the color scheme changed to the main color selection data, in the contents editing UI 75 of Fig. 7. The CPU 101 then returns to the processing of S1403.

Although Fig. 14 shows an example of processing to change the main colors for the number of colors in the color palette, this processing is merely an example. As described above, there are various ways to change the color scheme of the color palette, and the color scheme may be changed by processing other than the processing shown in Fig. 14.

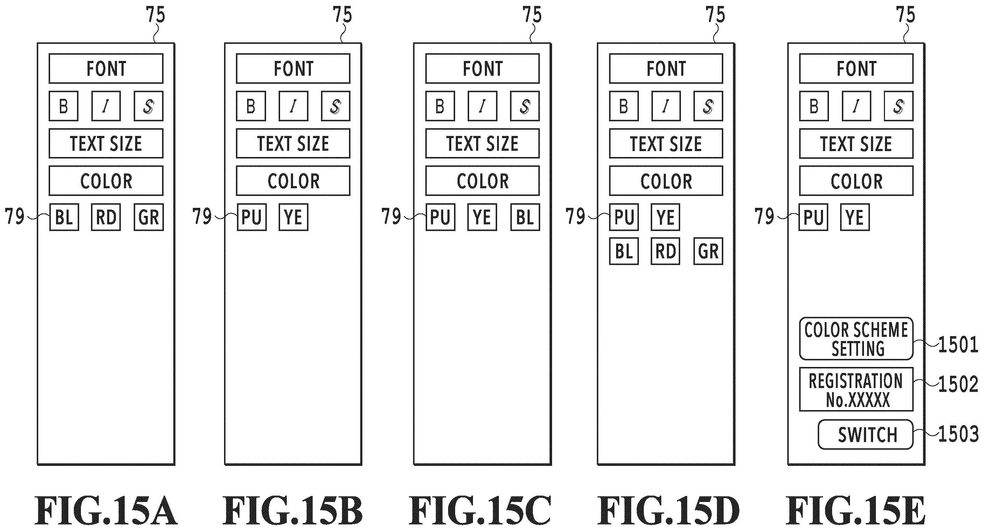

Figs. 15A to 15E are diagrams each showing an example of changing the color scheme of the color palette 79 in the contents editing UI 75 of Fig. 7. Fig. 15A shows the contents editing UI 75 before changing the color scheme of the color palette display. In Fig. 15A, before changing the color scheme of the color palette display, the color palette 79 is set to three display colors: blue (BL), red (RD), and green (GR). In addition, two colors, purple (PU) and yellow (YE), are selected as the main color selection data D12. Note that Figs. 15A to 15E show the name of each color for the sake of explanatory convenience, but the palette is actually displayed as being marked in that color (hereinafter, the same applies to color palettes in this specification).

Figs. 15B, 15C, and 15D each show the contents editing UI 75 after changing the color scheme of the color palette display. In Fig. 15B, the color palette 79 of the contents editing UI 75 is an example where two colors, purple (PU) and yellow (YE), which are the main color selection data D12, are displayed as display colors. In Fig. 15C, the color palette of the contents editing UI 75 is in a state where a maximum of three display colors can be displayed. In this case, Fig. 15C shows an example where, in addition to the two colors, purple (PU) and yellow (YE), which are the main color selection data D12, a first color of an originally prepared color palette is displayed as a display color. In this example, the first color of the originally prepared color palette is blue (BL). Therefore, purple (PU), yellow (YE), and blue (BL) are displayed in the color palette as shown in Fig. 15C. If the main color selection data D12 is purple (PU) only, two colors are added to the first color of the originally prepared color palette, and thus purple (PU), blue (BL), and red (RD) are displayed in the color palette 79.

Fig. 15D shows an example where the color palette 79 of the contents editing UI 75 displays all the colors of the originally prepared color palette, in addition to the two colors, purple (PU) and yellow (YE), which are the main color selection data D12. The colors of the originally prepared color palette are blue (BL), red (RD), and green (GR). In the color palette 79 of Fig. 15D, purple (PU) and yellow (YE), which are the main color selection data D12, are displayed in the first row, and blue (BL), red (RD), and green (GR) are displayed in the second row.

The color palette 79 may thus be configured to display only the main color selection data D12 (Fig. 15B). Specifically, only the main color selection data D12 may be displayed, instead of the colors of the color palette prepared in advance. The color palette 79 may also be configured to display the main color selection data D12 and a default color (Fig. 15C). Specifically, the color of the color palette prepared in advance may be treated as part of the colors of the main color selection data D12 and displayed in the color palette 79. The color palette 79 may also be configured to display the main color selection data D12 and default colors in such a way that differences therebetween can be recognized (Fig. 15D). Specifically, in addition to the color palette prepared in advance, a color palette with the colors of the main color selection data D12 may be additionally displayed. In Fig. 15C, a text may be displayed around the color palette 79 to clearly indicate the difference between the main color selection data D12 and the default color. For example, in Fig. 15D, a text "Oshi color" may be displayed above the purple (PU) and yellow (YE) palette, and a text "normal color" may be displayed above the blue (BL), red, and green (GR) palette. The main color selection data D12 and the default colors may thus be displayed in different ways.

Fig. 15E is a diagram showing an example of loading a color scheme setting save file F2 to set the display colors of the color palette 79 of the contents editing UI 75. On a basis of that the user presses the color scheme setting button 1501, the contents editing application loads the color scheme setting save file F2 based on the user's operation. A registration number is linked to the color scheme setting save file F2. The contents editing application displays the registration number in a registration number display region 1502. The user can identify the color scheme setting save file F2 by the registration number.

It is also possible, for example, to register a plurality of color scheme setting save files F2 as color scheme setting save files F2 that can be registered with the color scheme setting button 1501. In this case, as a switch button 1503 is pressed, the contents editing application can replace the color scheme setting in the order of the registered color scheme setting save files F2 and switch the display colors of each color palette. Specifically, the contents editing application is configured to be able to set the first color setting and the second color setting using the color scheme setting save file F2, and displays the switch button 1503 for switching between the first color setting and the second color setting for the colors to be applied to the color palette 79. The contents editing application can switch the color setting as the switch button 1503 is pressed. In the present embodiment, an example will be described where one color scheme setting save file F2 saves one pair of data, namely, the main color selection data D12 and the registration number. However, one color scheme setting save file F2 may save a plurality of pairs of the main color selection data D12 and the registration numbers. In this case, again, the display colors of the color palette and the display of the registration number in the registration number display region 1502 may be switched as the switch button 1503 is pressed.

The display modes described with reference to Figs. 15B to 15E are applicable as appropriate. For example, the user can select a desired display mode in advance on a setting screen (not shown). Alternatively, a display change button (not shown) may be provided in the contents editing UI 75, and the display mode of the color palette 79 may be changed as in the examples shown in Figs. 15A to 15E, in response to pressing of the display change button. Specifically, a button may be provided to enable switching between a mode of displaying a normal color palette and a mode (Oshi mode) of displaying a color palette of a desired color (Oshi color). A button may be provided to enable switching between display modes in the Oshi mode. Alternatively, a single switch button may be used to switch between a normal mode, Oshi mode 1, and Oshi mode 2 as appropriate.

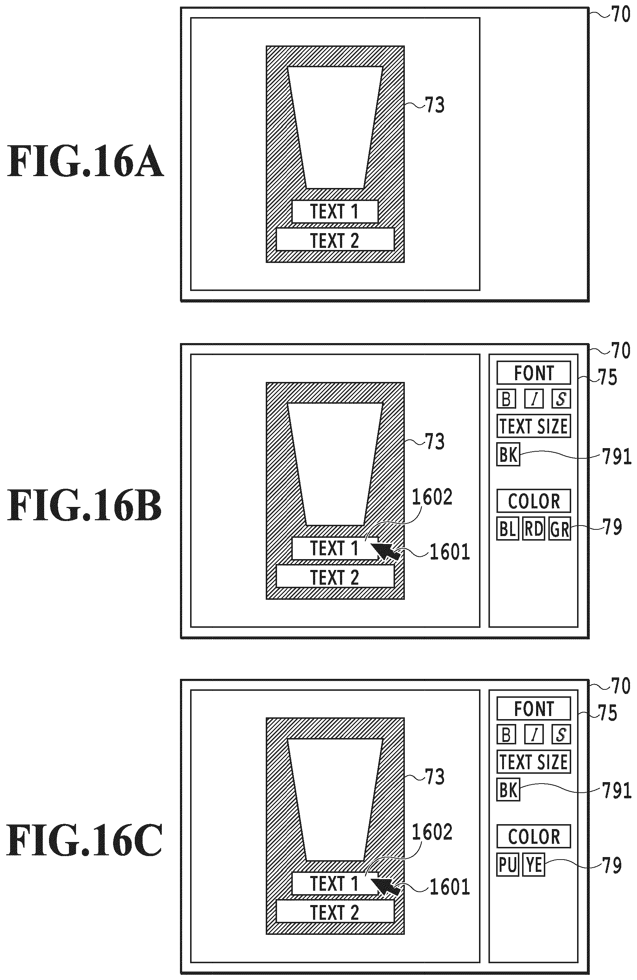

Figs. 16A to 16C are diagrams for explaining an example of changing the color of editing target contents using a color palette. Fig. 16A is a diagram showing again the editing screen 70 shown in Fig. 7. Note that some components are omitted. The editing target UI 73 has the editing target contents placed therein. Fig. 16B shows an example where the user moves a cursor 1601 over an object 1602 and clicks on it. As the object 1602 is clicked on, the contents editing application displays the contents editing UI 75 on the editing screen 70. Fig. 16B shows a comparative example where no main colors are set. The color of the object 1602 is black (BK), and the color of the object, black (BK), is displayed in a palette 791. If the user specifies a desired color from the color palette 79, the color of the object 1602 and the color of the palette 791 are changed to the specified color (for example, blue (BL)). Fig. 16C shows an example where the user moves the cursor 1601 over the object 1602 and clicks on it in a state where the main colors are set by the color matching setting described above. The color palette 79 is replaced with the main colors. If the user specifies a desired Oshi color (for example, purple (PU)) from the color palette 79, the color of the object 1602 and the color of the palette 791 are changed to the specified color (for example, purple (PU)). Note that Fig. 16C shows an example where the color palette 79 of the contents editing UI 75 shown in Fig. 15B is displayed, but other contents editing UIs 75 described with reference to Figs. 15A to 15E may be displayed.

(2-2) Effects of the Present Embodiment

As described above, according to the present embodiment, the usability of the contents editing application can be improved. In the present embodiment, in a case of changing the color of each object in a template using a UI, the color can be changed using a color desired by the user. Specifically, the contents editing application reads an image corresponding to the color desired by the user and extracts main colors from the image. The contents editing application uses the extracted main colors to change the display color of the color palette in the contents editing UI.

As described above, as a request to match the editing target contents with a desired color, the user desires to match the editing target contents with the color of an object or item actually in his/her possession. For example, the user desires to unify the color of the editing target contents with the color of his/her Oshi item in his/her possession. In a case of changing the color in the contents editing application, processing of changing the color is performed using a color palette. However, there is a case where the color of the Oshi item is not displayed in the color palette. In such a case, the user needs to find the desired color among many colors that are not displayed, which is time-consuming. There is also a case where the desired color is not a clear color such as red or blue, but a subtle color such as light purple or light blue. In such a case, it is even more time-consuming to find a color that matches the purpose.

In the present embodiment, the contents editing application reads an image of a color desired by the user and changes the color of the color palette. This allows the user to select a color that matches the purpose without requiring much time and effort in changing the color of an object placed in the editing target contents. By thus providing a UI that makes it easier for the user to match the editing target contents with the desired color, the usability of the contents editing application can be improved.

(Second Embodiment)

In the first embodiment, the description is given of the example where the contents editing application reads an image corresponding to a color desired by the user, extracts a main color from the image, and uses the extracted main color to change the display color of the color palette in the contents editing UI. Here, the color desired by the user, for example, may differ from one object to another. As a specific example, there is a case where the user owns an item, a cheering fan, with yellow or pink characters, a black background, and rectangular objects in light purple, light blue, pink, and the like. In this case, the desired color differs from one object to another. Many desired colors may also lead to a case where all the colors cannot be displayed in the color palette. It is also time-consuming to search through many color palettes.

In the present embodiment, description will be given of an example of changing the display color of the color palette in the contents editing UI, which is suitable in a case where the desired color differs from one object to another. The description of the same configuration and processing as those of the above embodiment will be omitted.

(3) Basic Configuration

(3-1) Hardware Configuration

Since a hardware configuration of the present embodiment is the same as that of the first embodiment, description thereof will be omitted.

(3-2) Software Configuration

Since a software configuration of the present embodiment is the same as that of the first embodiment, description thereof will be omitted.

(4) Representative Configuration

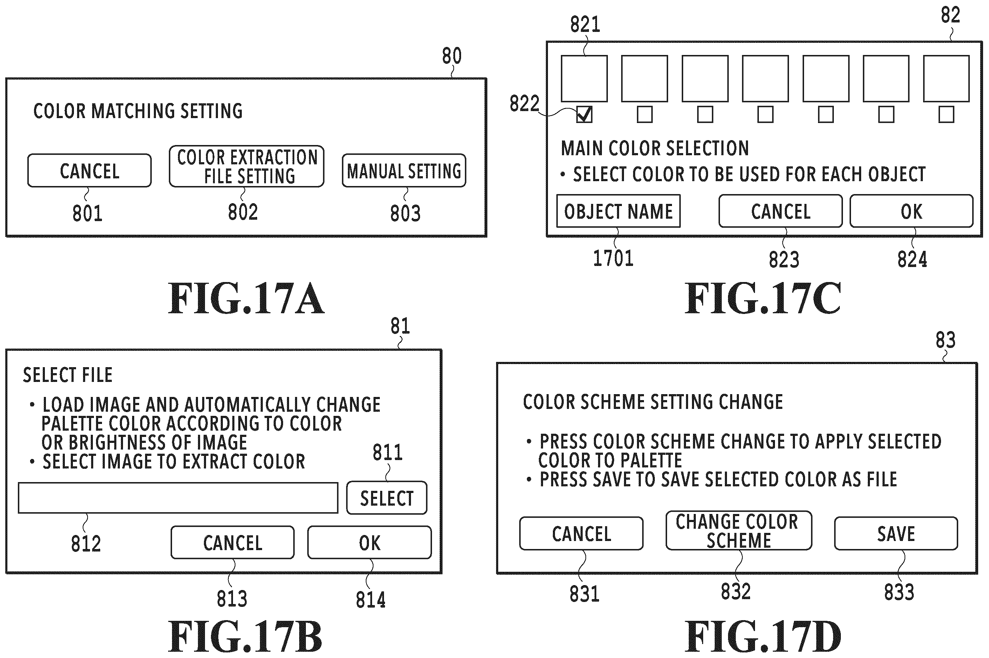

Figs. 17A to 17D are diagrams each showing an example of a dialog screen for color matching setting according to the present embodiment. The basic configuration in Figs. 17A to 17D is the same as the example described with reference to Figs. 8A to 8D, and thus differences will be mainly described. The main color selection dialog 82 of Fig. 17C is different between Figs. 17A to 17D and Figs. 8A to 8D. The main color selection dialog 82 in Fig. 17C displays a message that prompts the user to select a color he/she wants to use for each object. In Fig. 17C, an object name 1701 is further added to the configuration of Fig. 8C. In the present embodiment, in the main color selection dialog 82 of Fig. 17C, a main color is selected for each category of objects extracted from the color extraction file. As will be described later, objects can be classified into a plurality of categories. There are also a plurality of types of objects. One object category may include one type of object or may include a plurality of types of objects.

In the present embodiment, if the file selection OK button 814 is pressed in the file selection dialog 81 of Fig. 17B, the contents editing application extracts object information D13 from the color extraction file F1 selected as a file. The object information D13 is information about the object included in the color extraction file F1. For example, information about the object, such as the type of object, placement region, size (number of pixels), and color information, is extracted for each object. Each object information D13 extracted by the contents editing application is linked to object category information D14 about preset categories. For each object category information D14, the contents editing application performs processing of extracting a main color from the object information D13 linked to the object category information D14. The object category information D14 having the main color extracted is registered as selectable in an object name 1701 in Fig. 17C. For example, the object category information D14 corresponding to the object having the main color extracted is registered as list information and can be selected by the user. Specifically, if the object name 1701 is pressed by the user, a list corresponding to the object category is displayed. Then, if any object category displayed in the list is selected, the main color in the selected object category is set. Since the candidate display color is set for each object category information D14, the main color selection dialog 82 of Fig. 17C is displayed for each object category. Then, the main color candidate data D11 linked to the object category information D14 is placed in one or more color display regions 821.

For example, the main color candidate data D11 of the first object category is placed in the color display region 821. The user checks the main color selection checkbox 822 of the desired color among the candidate colors placed in the color display region 821. If the main color selection OK button 824 is pressed, the contents editing application holds the selected main color as the main color selection data D12 of the first object category. Thereafter, if the object name 1701 is pressed by the user, the contents editing application displays a list and receives selection of the object category by the user. If the second object category is selected, the contents editing application places the main color candidate data D11 linked to the object category information D14 of the second object category in the color display region 821. The contents editing application then receives selection by the user. The contents editing application thus repeats the main color selection processing for each of the categorized object categories, and holds the object category information D14 and the main color selection data D12 in association with each other. Upon completion of linking all object category information D14 to the main color selection data D12, the color scheme setting change dialog 83 of Fig. 17D is displayed. Although not shown, a button for proceeding to color scheme setting may be prepared in the main color selection dialog 82, and the main color selection dialog 82 may be displayed on a basis of that the button is pressed.

A specific example of the object category information D14 will be described. For example, one of the object category information D14 is a character category. There are various methods for the contents editing application to determine that an object is in the character category. One example is a method of extracting a character object. As a method of extracting a character object, a well-known OCR (Optical Character Recognition) or the like, for example, is used. OCR is a technology to perform character recognition on extracted characters by reading an image and performing layout analysis, line extraction, and character extraction on the read image. The contents editing application extracts the color of a region of the object recognized as a character, and sets the color as the main color candidate data D11 of the character category.

One of the object category information D14 is a background category. The contents editing application may determine that an object belongs to the background category by extracting a region other than a foreground portion of an image as a background region. As a background extraction method, for example, the well-known deep learning is used to extract the background. Deep learning is one of the so-called machine learning techniques, and makes it possible to analyze the image and distinguish between the foreground and background portions by learning rules and patterns for data contained in the image. The contents editing application extracts the color of the region determined to be the background and sets the color as the main color candidate data D11 of the background category. Moreover, objects other than the background may be treated as one category, and the extracted color of the object other than the background may be set as the main color candidate data D11 of the "object other than the background".

Note that, as an example of the method of extracting objects to be categorized, the color extraction file F1 is treated as raster image data for extraction. However, the present disclosure is not limited to this example. For example, the color extraction file F1 may be data for displaying on a HTML or CSS Web page as described above. In the HTML file structure, tag information for distinguishing each object can be set. For example, various tag information can be included, such as font, table, image, or frame. In many cases, a color can be set for each tag information. The tag information for which a color can be set may be the object category information D14, and the color that is frequently used for the same tag may be the main color candidate data D11.

(4-1) Flowchart of the Present Embodiment

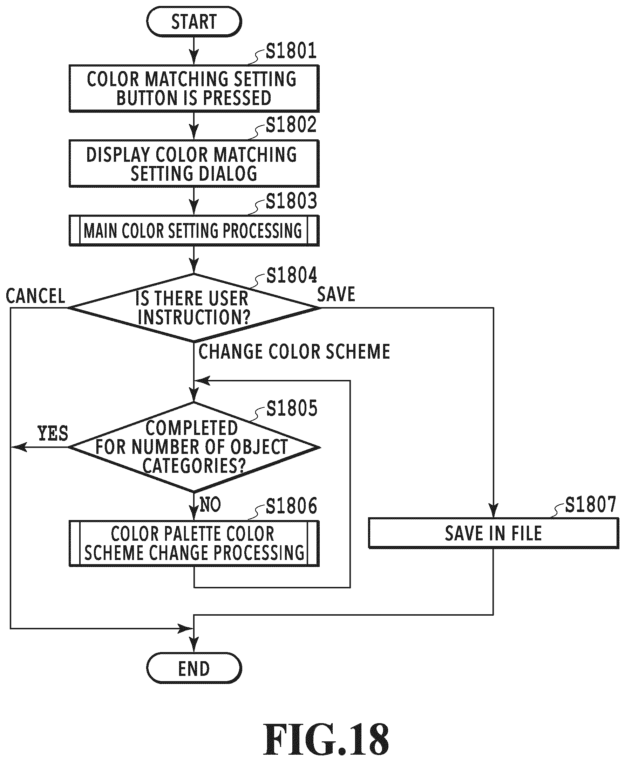

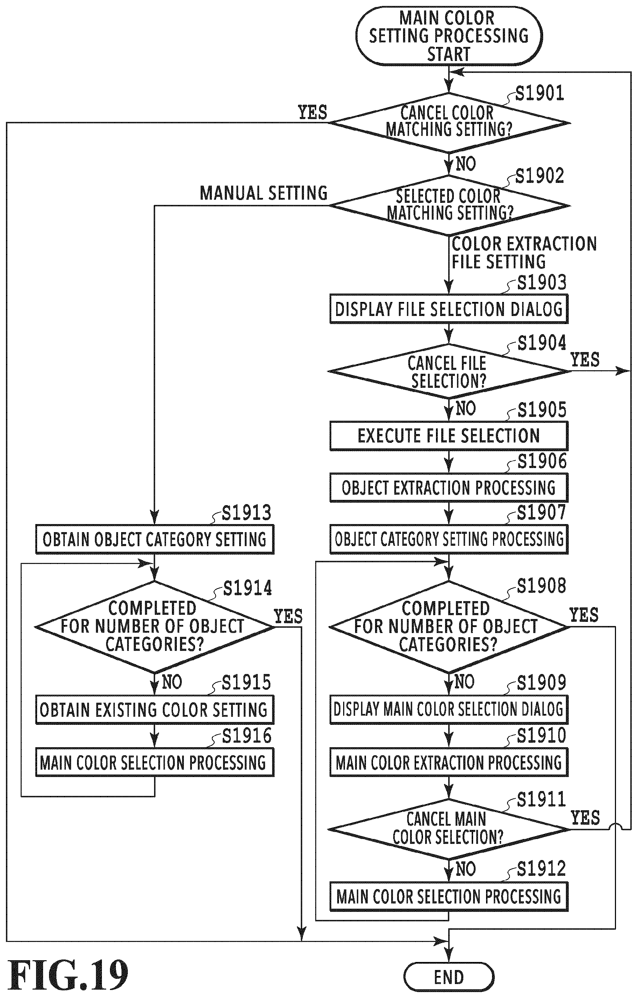

Figs. 18 and 19 are flowcharts for explaining processing of changing the display color of the color palette in the contents editing UI for each object category according to the present embodiment. Fig. 18 is a flowchart of color palette display processing. Fig. 19 is a flowchart of main color setting processing. The premise of the processing of this flowchart and the subject of the operation are the same as the example described in the first embodiment. In addition, description of the same processing as that described in the first embodiment will be omitted.

The processing of S1801 and S1802 is the same as that of S1201 and S1202. The main color setting process of S1803 will be described in detail later. The processing of S1804 and S1807 is the same as that of S1204 and S1206. If the user's instruction in S1804 is to change the color scheme, the CPU 101 proceeds to S1805.

In S1805, the CPU 101 determines whether the processing for all object categories is completed. In the present embodiment, the object category information D14 is an object item whose color can be changed using the contents editing UI 75. The object categories indicated by the object category information D14 include, for example, text, background, rectangle, and the like. In this example with three types, the CPU 101 determines in S1805 whether the color palette color scheme change processing in S1806 to be described later is completed for the three types. If it is determined that the processing is completed for all object categories, the CPU 101 ends the processing of the flowchart shown in Fig. 18. If it is determined that the processing is not completed for all object categories, the CPU 101 proceeds to S1806.

In S1806, the CPU 101 performs color palette color scheme change processing to change the color scheme of the color palette for the processing target object category. The CPU 101 then returns to S1805. The color palette color scheme change processing can be the same as the example of S1205 (and Fig. 14), and thus description thereof will be omitted.

Fig. 19 is a flowchart showing the details of the main color setting processing in S1803. As for the same steps as those in Fig. 13, description thereof will be omitted. The processing from S1901 to S1905 is the same as that from S1301 to S1305.

In S1906, the CPU 101 uses the object extraction method described above to extract one or more pieces of object information D13 from the color extraction file F1. For example, the extracted object information may be text, background, image, rectangle, ellipse, two-dimensional code, and other objects.

In S1907, the CPU 101 performs object category setting processing. The CPU 101 performs processing of linking each piece of extracted object information D13 extracted to the preset object category information D14.

For example, it is assumed that the object category information D14 includes three types of color-changeable categories: a character category, a background category, and a rectangle and ellipse category. The CPU 101 determines which object category each piece of extracted object information D13 belongs to. As a specific example, it is assumed that the extracted object information D13 includes three types of character objects, one type of background object, and two types of image objects. It is also assumed that there are five types of rectangular objects, two types of elliptical objects, one type of two-dimensional code object, and ten types of other objects. In this case, three types of character objects are linked to the character category of the object category information D14. One type of background object is linked to the background category of the object category information D14. Five types of rectangular objects and two types of elliptical objects are linked to the rectangle category of the object category information D14.

The following are specific examples of linking.

| Object category information D14 | Object information D13 |
| --- | --- |
| Character category | 3 types of character objects |
| Background category | 1 type of background object |
| Rectangle and ellipse category | 5 types of rectangle objects |
| | 2 types of ellipse objects |
| No category | 2 types of image objects |
| | 1 type of 2D code object |
| | 10 types of other objects |

In S1908, the CPU 101 determines whether or not the processing has been performed for the number of object categories. For example, if the object category information D14 includes three types, namely, the character category, the background category, and the rectangle and ellipse category, the processing is repeated until the main color extraction processing and the main color selection processing are completed for the three types. Upon completion of the processing for the number of object categories, the CPU 101 ends the processing of the flowchart shown in Fig. 19.

In S1909, the CPU 101 displays the main color selection dialog 82 of Fig. 17C. In S1910, the CPU 101 performs processing to extract main color candidate data D11 from the object information D13 linked to the object category information D14 to be processed, in the selected color extraction file F1. The extraction processing of the main color candidate data D11 itself is the same as the processing described in S1307. The difference here is that the extraction target is an object indicated by the object information D13. The CPU 101 assigns the extracted main color candidate data D11 to the color display region 821 in the main color selection dialog 82 of Fig. 17C. The processing of S1911 is the same as that of S1308. The main color selection processing in S1912 is also the same as in S1310. After S1912, the CPU 101 returns to S1908.

The processing of S1913 will be described in a case where the CPU 101 determines in S1902 that the manual setting button 803 is selected. In S1913, the CPU 101 performs processing to obtain object category information D14. As in the example described in S1907, the object category information D14 includes three types of color-changeable categories: a character category, a background category, and a rectangle category.

In S1914, the CPU 101 determines whether or not the processing has been performed for the number of object categories. For example, if the object category information D14 includes three types, namely, a character category, a background category, and a rectangle and ellipse category, the processing is repeated until the main color selection processing is completed for the three types. Upon completion of the processing for the number of object categories, the CPU 101 ends the processing of the flowchart shown in Fig. 19. In S1915, the CPU 101 displays a preset color (existing color) as the main color candidate data D11 in the color display region 821 of the main color selection dialog 82 of Fig. 17C. The main color selection processing in S1916 is the same as that in S1310. Upon completion of the processing in S1916, the CPU 101 returns to S1914.

In the processing of the flowchart described above, the description is given of an example where the processing of extracting colors from the color extraction file F1 is performed for all object categories, or manual setting is performed for all object categories. However, the present disclosure is not limited to this example. A configuration may be employed that makes it possible to switch between extracting colors from the color extraction file F1 and performing manual setting for each object category. Furthermore, the main color does not have to be set for all object categories, and the main color may be set only for the object category desired by the user.

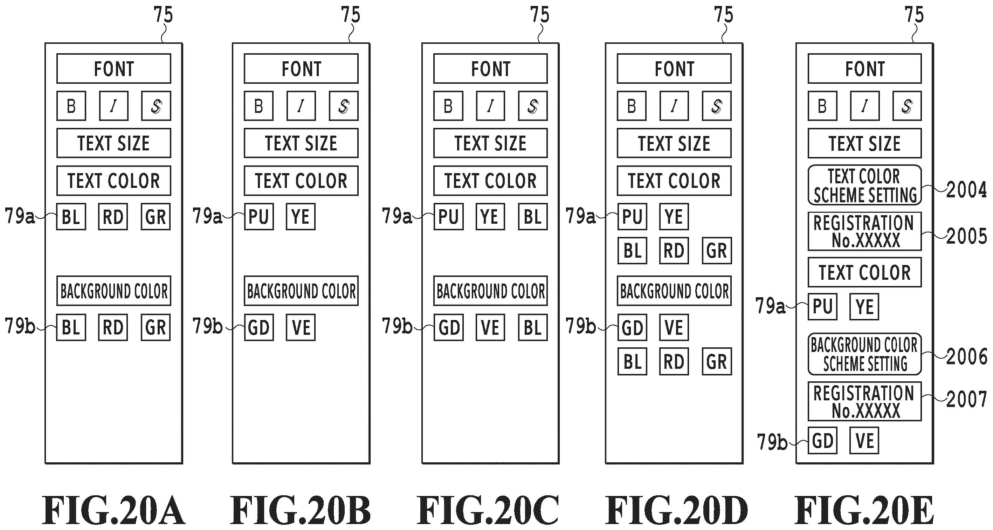

Figs. 20A to 20E are diagrams each showing an example of changing the color scheme of the color palette 79 in the contents editing UI 75 of Fig. 7 according to the present embodiment. Fig. 20A shows the contents editing UI 75 before changing the color scheme of the color palette display. In Fig. 20A, before changing the color scheme of the color palette display, the color palette 79 is set with three display colors, blue (BL), red (RD), and green (GR). In addition, two colors, purple (PU) and yellow (YE), are selected as the main color selection data D12 for the character category, and two colors, gold (GD) and vermilion (VE), are selected as the main color selection data D12 for the background category. In the present embodiment, unlike the example described in Figs. 15A to 15E, a palette is prepared for each object category. Here, the character category and the background category are displayed as the object categories. A first color palette 79a is prepared for the character category, and a second color palette 79b is prepared for the background category. Note that the present disclosure is not limited to this example, and other categories may be displayed, or the contents editing UI 75 may be configured to be scrolled to display other categories. Alternatively, only the palettes of the object categories having the color schemes changed by the color scheme change processing may be displayed. The display order of the palettes may be configured to be freely specified or changeable by the user. Alternatively, the priority may be determined based on the number of object types extracted in the main color selection processing or the region occupied in the image, and the display order may be set according to the determined priority.

Figs. 20B, 20C, and 20D each show the contents editing UI 75 after changing the color scheme of the color palette display. In Fig. 20B, the first color palette 79a for text color in the contents editing UI 75 displays two colors, purple (PU) and yellow (YE), which are the main color selection data D12, as display colors. In this example, the second color palette 79b for background displays two colors, gold (GD) and vermilion (VE), which are the main color selection data D12, as display colors.

Fig. 20C shows a state where the first color palette 79a for text color and the second color palette 79b for background in the contents editing UI 75 can display up to three display colors. In this case, in addition to the two colors as the main color selection data D12, the first color of the originally prepared color palette is displayed as the display color in each color palette. In this example, since the first color of the originally prepared color palette is blue (BL), the first color palette 79a displays purple (PU), yellow (YE), and blue (BL). The second color palette 79b displays gold (GD), vermilion (VE), and blue (BL). If the main color selection data D12 for text is purple (PU) only, two colors are added from the first color of the originally prepared color palette, resulting in purple (PU), blue (BL), and red (RD) displayed in the first color palette 79a. Similarly, if the main color selection data D12 for background is gold (GD) only, two colors are added from the first color of the originally prepared color palette, resulting in gold (GD), blue (BL), and red (RD) displayed in the second color palette 79b.

Fig. 20D shows an example where the first color palette 79a for text color and the second color palette 79b for background in the contents editing UI 75 display all of the originally prepared color palettes, in addition to the two colors of the respective main color selection data D12. Specifically, the first color palette 79a for text has purple (PU) and yellow (YE), as the main color selection data D12, placed in the first row, and the originally prepared blue (BL), red (RD), and green (GR) placed in the second row. The second color palette 79b for background has gold (GD) and vermilion (VE), as the main color selection data D12, placed in the first row, and the originally prepared blue (BL), red (RD), and green (GR) placed in the second row.

Fig. 20E is a diagram showing an example of loading the color scheme setting save file F2 to set the display colors of each color palette in the contents editing UI 75.

Fig. 20E shows a configuration that allows color scheme setting by loading a file for each object category. As the user presses a text color scheme setting button 2004, the contents editing application loads the color scheme setting save file F2 based on the user operation. The color scheme setting save file F2 has a registration number linked thereto, and the contents editing application displays the registration number in a registration number display region 2002. The user can identify the color scheme setting save file F2 by the registration number. Similarly, as the user presses a background color scheme setting button 2006, the contents editing application loads the color scheme setting save file F2 based on the user operation. The color scheme setting save file F2 has a registration number linked thereto, and the contents editing application displays the registration number in a registration number display region 2007. The user can identify the color scheme setting save file F2 by the registration number.

Note that, in Fig. 20E, the color scheme setting save file F2 is loaded for each object category, but the present disclosure is not limited to this example. If the color scheme setting save file F2 holds the color scheme settings for each object category, only one color scheme setting button may be provided as shown in Fig. 15E. The configuration shown in Figs. 20A to 20E may also include a switching button as shown in Fig. 15E, and the color scheme may be switched in response to the operation of the switching button.

Otherwise, various display modes can be used as the display mode of the contents editing UI 75, as in the example described in the first embodiment with reference to Figs. 15A to 15E.

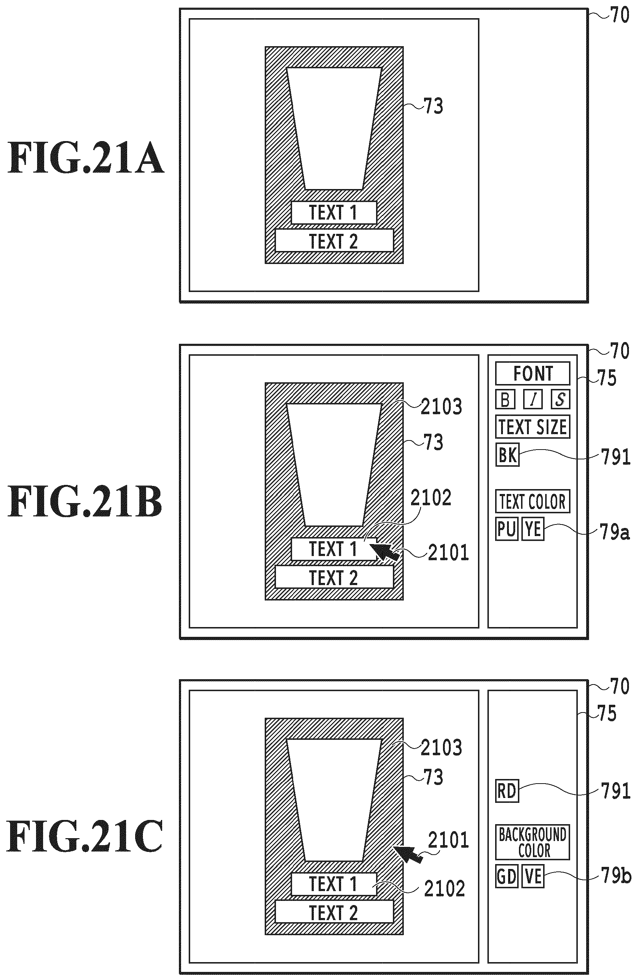

Figs. 21A to 21C are diagrams each illustrating an example of changing the color of the editing target contents using a color palette. In this example, as described in Figs. 20A to 20E, purple (PU) and yellow (YE) are placed in the first color palette 79a for characters, and gold (GD) and vermilion (VE) are placed in the second color palette 79b for background. Fig. 21A is a diagram showing the editing screen 70 of Fig. 7. Note that some components are omitted. The editing target UI 73 has the editing target contents placed therein. Fig. 21B shows an example where the user moves a cursor 2101 over a character object 2102 and clicks on it. As the character object 2102 is clicked on, the contents editing application displays the contents editing UI 75 including the first color palette 79a on the editing screen 70. The initial color of the character object 2102 is black, and the palette 791 displays black (BK), which is the current color of the character object 2102. As the user specifies a desired color from the first color palette 79a, the color of the character object 2102 and the color of the palette 791 are changed to the specified color (for example, purple (PU)).

Fig. 21C shows an example where the user moves the cursor 2101 over a background object 2103 and clicks on it. Since the background object 2103 has no text, text-related buttons such as font and text size are not displayed, unlike Fig. 21B. As the background object 2103 is clicked on, the contents editing application displays the contents editing UI 75 including the second color palette 79b on the editing screen 70. The initial color of the background object 2103 is red (RD), and the palette 791 displays red (RD), which is the current color of background object 2103. As the user specifies a desired color from the second color palette 79b, the color of the background object 2103 and the color of the palette 791 are changed to the specified color (for example, gold (GD)).

Note that, in Figs. 21B and 21C, the color palette of the object category is displayed according to the type of the specified object, but the present disclosure is not limited to this example. As described with reference to Figs. 20A to 20E, all color palettes may be displayed for each object category. That is, in Figs. 21B and 21C, both the first color palette 79a and the second color palette 79b may be displayed.

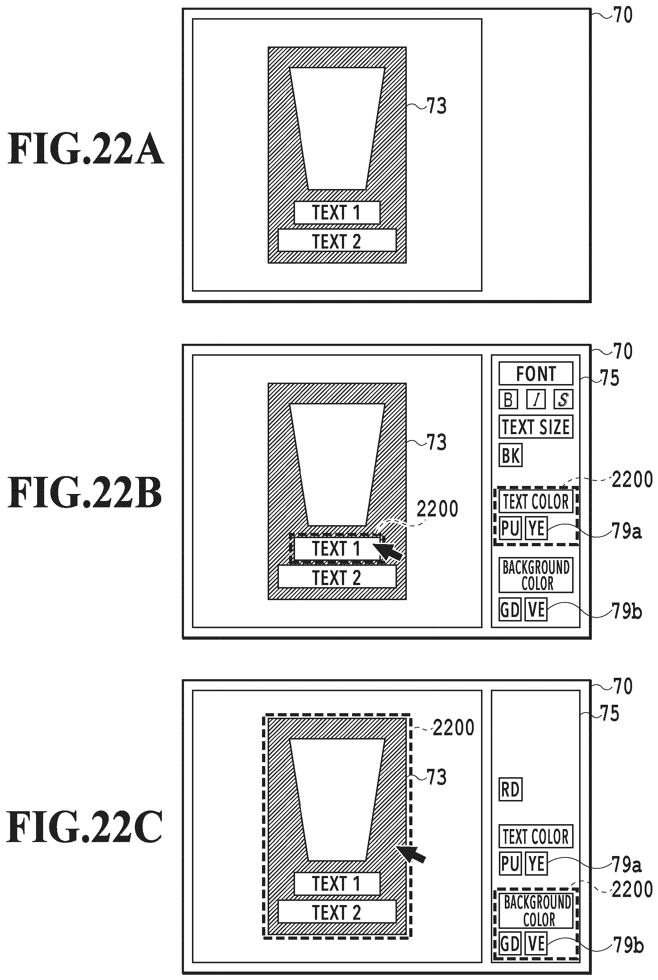

Figs. 22A to 22C are diagrams each illustrating an example of changing the color of the editing target contents using a color palette. The situations in Figs. 22A to 22C are the same as those in Figs. 21A to 21C, respectively. Figs. 22B and 22C shows an example where both the first color palette 79a and the second color palette 79b are displayed in the contents editing UI 75 as described above. Figs. 22A to 22C also show examples where, as an editing target object is selected in the editing target contents in the editing target UI 73, the selected object and the color palette of the object category corresponding to the type of the object are highlighted. Here, an example is shown in which the highlighting is displayed with a thick dotted frame 2200, but the manner of highlighting is not limited to this example. The frame may be blinked, or the target object and the color palette itself may be blinked without displaying the frame, and any configuration may be adopted as long as the user can recognize the target.

In the present embodiment, the description is given of an example of displaying the color palette for each object category. However, as described in the first embodiment, a color palette prepared in advance may be displayed together with the color palette for each object category. In addition, the colors of the color palette prepared in advance may be displayed so as to constitute part of the color palette for each object category. In other words, part of the color palette of the main color selection data D12 may be the colors of the color palette prepared in advance.

(4-2) Effects of the Present Embodiment

As described above, according to the present embodiment, the usability of the contents editing application can be improved. In the present embodiment, as in the first embodiment, in a case of changing the color of each object of the editing target contents using the UI, the user can change the color using his/her desired color. Furthermore, in the present embodiment, the contents editing application reads an image corresponding to the color desired by the user, and extracts a main color from an image for each object category. The display color of the color palette of the contents editing UI is changed using the main color extracted for each object category. This makes it possible to easily change the color of a desired object in the editing target contents. In addition, upon selection of an editing target object, the color palette of the object category corresponding to the type of the object can be displayed in a distinguishable manner on the UI. This makes it possible for the user to easily distinguish the color, and also to improve operability.

(Third Embodiment)

In the first and second embodiments, the description is given of the example where the contents editing application reads an image corresponding to a color desired by the user, extracts a main color from the image, and changes the display color of the color palette of the contents editing UI using the extracted main color.
In the present embodiment, description will be given of an example where the color of various materials that can be added as objects, rather than the display color of the color palette, can be changed to a color that matches the desired color and added as an object.
For example, as described above, a situation is assumed in which the user wants to edit a poster to match the color of his/her Oshi item in his/her possession. In a case of creating a poster using a template, the user wants to add a prepared material (such as clip art) as an object to the poster, and match the color of the added object to the desired color (Oshi's color). In this case, it is not possible to determine whether the material is suitable for the poster unless the material is added and the color is changed. This makes it very difficult for the user to make this determination upon selecting the material. In addition, even if a technology is used to automatically generate a color scheme pattern based on design rules from the colors of the components actually placed in the page design, the color of the color scheme pattern does not necessarily match the desired color of the item or the like at hand. It is also not possible to add a material suitable for the desired color. Therefore, in the present embodiment, description will be given of an example where a UI is provided that allows the user to select a material that is matched to the desired color beforehand, upon selecting a material to be added to the contents as an object. The description of the same configuration and processing as those of the above embodiment will be omitted.

(5) Basic Configuration

(5-1) Hardware Configuration

Since a hardware configuration of the present embodiment is the same as that of the first embodiment, description thereof will be omitted.

(5-2) Software Configuration

Since a software configuration of the present embodiment is the same as that of the first embodiment, description thereof will be omitted.

(6-1) Representative Configuration

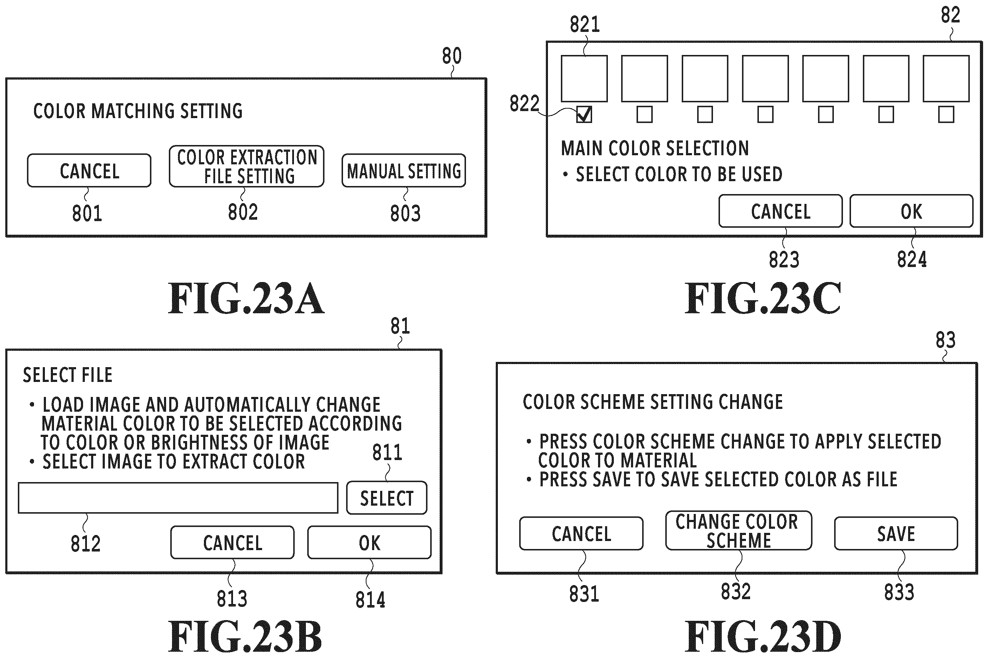

Figs. 23A to 23D are diagrams each showing an example of a dialog screen for color matching setting according to the present embodiment. The basic configuration in Figs. 23A to 23D is the same as the example described with reference to Figs. 8A to 8D, and thus differences will be mainly described. Note that, in the present embodiment, again, if the color matching setting button 78 is pressed on the editing screen 70, the contents editing application displays the same color matching setting dialogue screen as that described in the first embodiment and the like. The configuration for extracting the main color and receiving the selection of the main color by the user is also the same as in the example described in the first embodiment. The difference is that the target to be changed using the main color is a color palette or a material.
Figs. 23A to 23D and Figs. 8A to 8D show different messages displayed in a file selection dialog 81 of Fig. 23B and a color scheme setting change dialog 83 of Fig. 23D. The file selection dialog 81 of Fig. 23B displays a message notifying the user of automatically changing the color of the selected material. The color scheme setting change dialog 83 of Fig. 23D displays a message prompting the user to press a color scheme change button if the selected color is to be applied to the material. In the present embodiment, if a color scheme change button 832 is pressed, the material selection UI 72, instead of the contents editing UI 75, is changed based on the main color selection data D12.

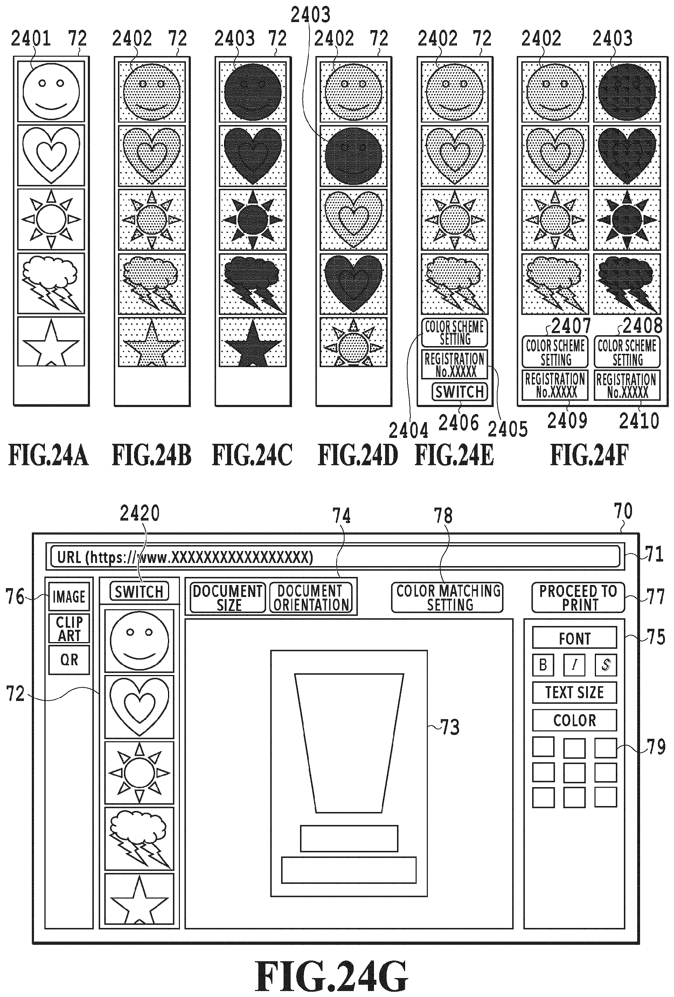

Figs. 24A to 24G are diagrams each illustrating the material selection UI 72 before and after color matching settings in the present embodiment. In the present embodiment, the target for which the color scheme is changed as the color scheme change button 832 in Fig. 23D is pressed is an addition candidate material (object) displayed in the material selection UI 72 in Fig. 7. Figs. 24A to 24F are image diagrams showing the extracted addition candidate material displayed in the material selection UI 72 on the editing screen 70 of Fig. 7.

The addition candidate materials include, for example, illustrations or clip art, and are assumed to be so-called vector format image data, such as an SVG file. In such vector format data, materials for displaying images or characters are digitized and recorded as two-dimensional information. As the materials are digitized as two-dimensional information, even if the SVG data is enlarged or reduced, the digitized and placed color information can be displayed while retaining the same color information even in the enlarged or reduced region. Various materials, such as illustrations and clip art, are composed of a combination of various two-dimensional information, and each has a set color.

In the first embodiment, a material is added to the editing target contents as an object and placed, and then one or more pieces of two-dimensional information of the SVG data of the material can be specified, and the color can be changed using a color palette or the like. However, if the colors of various materials in the SVG data are replaced with the main color selection data D12 described above, the colors all become the same color, and the margins of each material also become the same color, causing the combined structure of the materials to be hidden.

In the present embodiment, in a case of changing the color scheme of the addition candidate material, a method of changing the color balance of the entire candidate material to be added based on the main color selection data D12 described in the first embodiment and the like will be described. For example, color balance adjustment is performed as a method of changing the color balance of the entire material.

Fig. 24A shows an addition candidate material 2401 before color scheme change displayed in the material selection UI 72. For example, the addition candidate material 2401 before color scheme change is SVG data composed of various colors.

Figs. 24B, 24C, and 24D each show an addition candidate material after color scheme change displayed in the material selection UI 72. In Fig. 24B, an addition candidate material 2402 after color scheme change displayed in the material selection UI 72 is a material obtained by changing the color scheme based on the main color selection data D12 described above from the addition candidate material 2401 before color scheme change in Fig. 24A. For example, Fig. 24B shows an example where the color scheme of the addition candidate material is changed if the main color selection data D12 is purple (PU).

In Fig. 24C, an addition candidate material 2403 after color scheme change displayed in the material selection UI 72 is a material obtained by changing the color scheme based on the main color selection data D12 described above from the addition candidate material 2401 before color scheme change in Fig. 24A. For example, Fig. 24C shows an example where the color scheme of the addition candidate material is changed if the main color selection data D12 is yellow (YE). That is, Figs. 24B and 24C show examples of different main color selection data D12 for changing the color scheme.

Fig. 24D shows an example where, if there are a plurality of pieces of main color selection data D12 for changing the color scheme, examples of color scheme change in the material with respective colors are displayed alternately. Fig. 24D shows, for example, a state where two colors, purple (PU) and yellow (YE), are set in the main color selection data D12. In Fig. 24D, the addition candidate material 2402 after color scheme change displayed in the material selection UI 72 is the same as the material 2402 of Fig. 24B. The addition candidate material 2403 after color scheme change displayed in the material selection UI 72 in Fig. 24D is the same as the material 2403 of Fig. 24C. The addition candidate material 2402 after color scheme change in which the main color selection data D12 is purple (PU) and the addition candidate material 2403 after color scheme change in which the main color selection data D12 is yellow (YE) are displayed alternately in the material selection UI 72.

Fig. 24E shows an addition candidate material after color scheme change displayed in the material selection UI 72. In Fig. 24E, the display color of the addition candidate material after color scheme change displayed in the material selection UI 72 can be set by loading the color scheme setting save file F2, as described in the first embodiment and the like. As the user presses a color scheme setting button 2404, the contents editing application loads the color scheme setting save file F2. Since a registration number is linked to the color scheme setting save file F2, the contents editing application displays the registration number in a registration number display region 2405.

For example, it is also possible to register a plurality of color scheme setting save files F2 as the color scheme setting save file F2 that can be registered with the color scheme setting button 2404. In this case, as a switch button 2406 is pressed, the contents editing application can replace the color scheme setting in the order of the registered color scheme setting save files F2 and switch the display color of each color palette.

Fig. 24F shows an example where the display color of the addition candidate material after color scheme change displayed in the material selection UI 72 is changed to a plurality of display colors and displayed together. For example, the user can set the display color using a first color scheme setting button 2407 and a second color scheme setting button 2408.

First, as the color scheme setting button 2407 is pressed, the contents editing application loads the first color scheme setting save file F2. Since the color scheme setting save file F2 has the registration number linked thereto, the contents editing application displays the registration number in a registration number display region 2409. If the main color selection data D12 of the first color scheme setting save file F2 is purple (PU), the addition candidate material 2402 after color scheme change is displayed.

Next, as the color scheme setting button 2408 is pressed, the contents editing application loads the second color scheme setting save file F2. Since the color scheme setting save file F2 has the registration number linked thereto, the contents editing application displays the registration number in a registration number display region 2410. If the main color selection data D12 of the second color scheme setting save file F2 is yellow (YE), the addition candidate material 2403 after color scheme change is displayed.

As shown in Fig. 24F, the description is given of the example where the two color scheme setting save files F2 are loaded to perform the color scheme change and display of the addition candidate materials, but the present disclosure is not limited to this display method. The method of changing the color scheme is not limited to the above example as long as the color scheme of the addition candidate material can be changed and the material after color scheme change can be displayed. The number of materials to be displayed may also change according to the number of pieces of the main color selection data D12.

As long as the addition candidate materials displayed in the material selection UI 72 can be divided into object categories as described in the second embodiment, the color scheme change setting may be performed by object or by object category.

The display modes illustrated in Figs. 24B to 24F can be applied as appropriate. For example, the user can select a desired display mode in advance on a setting screen (not shown). Alternatively, a display change button may be provided in the material selection UI 72, and the display mode of the color palette 79 may be changed in response to the pressing of the display change button.

Fig. 24G is a diagram showing another example of the editing screen 70. The editing screen 70 of Fig. 24G has a switching button 2420 provided in the material selection UI 72 in the editing screen 70 shown in Fig. 7. The switching button 2420 is a button for switching between the display modes illustrated in Figs. 24B to 24F. In a case where the main color selection data D12 includes the two types described above, as the user presses the switching button 2420, the display is sequentially switched to the material selection UI 72 as illustrated in Figs. 24B to 24F, for example. The user can select a material suitable for a desired color from the material selection UI 72, and add the material to the editing target contents displayed in the editing target UI 73, for example, as an object whose color has been changed.

Next, a method for changing the color scheme of the addition candidate material 2401 based on the main color selection data D12 will be described. As an example, description will be given of a case of using color balance adjustment. There are various known methods for color balance adjustment processing. One example is color conversion according to a predetermined method.

For example, the addition candidate material 2401 before color scheme change is SVG data obtained by combining five pieces of vector information. The five pieces of vector information each has a color set. Specifically, the following colors are set.

The color of the first vector information is (R, G, B) = (100, 225, 100)

The color of the second vector information is (R, G, B) = (100, 90, 200)
The color of the third vector information is (R, G, B) = (75, 50, 80)
The color of the fourth vector information is (R, G, B) = (200, 50, 200)
The color of the fifth vector information is (R, G, B) = (200, 100, 75)
There are various known techniques for color balance adjustment. Any method can be used, but here an example of using data obtained by converting RGB values into HSV values as hue data will be described. The HSV values are the values of hue H, saturation S, and lightness V. The contents editing application performs color conversion processing based on the hue data.

The method for changing the RGB values to the HSV values is as follows. The maximum (MAX) and minimum (MIN) values of R, G, and B are calculated.

If R is the maximum value

$$\text{Hue } H = 60 \times ((G\text{-}B) \div (MAX\text{-}MIN))$$

If G is the maximum value

$$\text{Hue H} = 60 \times ((\text{B-R}) \div (\text{MAX-MIN}))+120$$

If B is the maximum value

$$\text{Hue H} = 60 \times ((\text{R-G}) \div (\text{MAX-MIN}))+240$$

$$\text{Saturation S} = (\text{MAX-MIN})) \div \text{MAX} \times 256$$

$$\text{Lightness V} = \text{MAX} \div 256 \times 256$$

If R=G=B, the hue H is 0. The hue H is in the range of 0 to 359. The saturation S is in the range of 0 to 255. The lightness V is in the range of 0 to 255. If the calculation result of the hue H is a negative value, 360 is added.

For example, the RGB values of purple in the main color selection data D12 are as follows.

The main color selection data D12 (R, G, B) = (250, 128, 250)

The RGB values of the above main color selection data D12 are converted to HSV values as follows. Note that errors are omitted.

The main color selection data D12 (H, S, V) = (300, 124, 250)

Similarly, the HSV values of the five pieces of vector information of the SVG data are as follows.

The color of the first vector information is (H, S, V) = (120, 142, 225)

The color of the second vector information is (H, S, V) = (245, 140, 200)
The color of the third vector information is (H, S, V) = (290, 96, 80)
The color of the fourth vector information is (H, S, V) = (300, 192, 200)
The color of the fifth vector information is (H, S, V) = (12, 160, 200)
In a case of changing the five pieces of vector information of the SVG data based on the main color selection data D12, the result is as follows when adjusted to the hue H = 300 of the main color selection data D12. In other words, if the hue H of the five pieces of vector information of the SVG data is changed while maintaining the brightness information (lightness V), the result is as follows.

The color of the first vector information is (H, S, V) = (300, 142, 225)

The color of the second vector information is (H, S, V) = (300, 140, 200)
The color of the third vector information is (H, S, V) = (300, 96, 80)
The color of the fourth vector information is (H, S, V) = (300, 192, 200)
The color of the fifth vector information is (H, S, V) = (300, 160, 200)
The method for changing the HSV values to the RGB values is as follows.

Maximum value MAX = V

$$\text{Minimum value MIN} = \text{MAX-}((\text{S} \div 255) \times \text{MAX})$$

If H is in the range of 0 to 60, the formula is as follows.
R = MAX

$$\text{G} = (\text{H} \div 60) \times (\text{MAX-MIN})+\text{MIN}$$

B = MIN
If H is in the range of 60 to 120, the formula is as follows.

$$\text{R} = ((120\text{-H}) \div 60) \times (\text{MAX-MIN})+\text{MIN}$$

G = MAX
B = MIN
If H is in the range of 120 to 180, the formula is as follows.

R = MIN

G = MAX

$$B = ((H\text{-}120)\div 60)\times(MAX\text{-}MIN)+MIN$$

If H is in the range of 180 to 240, the formula is as follows.

R = MIN

$$G = ((240\text{-}H)\div 60)\times(MAX\text{-}MIN)+MIN$$

B = MAX
If H is in the range of 240 to 300, the formula is as follows.

$$R = ((H\text{-}240)\div 60)\times(MAX\text{-}MIN)+MIN$$

G = MIN
B = MAX
If H is in the range of 300 to 360, the formula is as follows.

R = MAX

G = MIN

$$B = ((360\text{-}H)\div 60)\times(MAX\text{-}MIN)+MIN$$

If the five pieces of vector information of the SVG data are converted into HSV data based on the main color selection data D12 and then converted back into RGB values, the result is as follows.

The color of the first vector information is (R,G,B) = (225, 99, 225)

The color of the second vector information is (R, G, B) = (200, 90, 200)
The color of the third vector information is (R, G, B) = (80, 49, 80)
The color of the fourth vector information is (R, G, B) = (200, 49, 200)
The color of the fifth vector information is (R, G, B) = (200, 74, 200)
The contents editing application displays the SVG data thus converted as the addition candidate material 2402 of Fig. 24B.

Next, description will be given of an example where the main color selection data D12 is yellow, and the color scheme of the addition candidate material 2401 is changed to create the addition candidate material 2403 in Fig. 24C.
For example, the RGB value if the main color selection data D12 is yellow is as follows.
The main color selection data D12 (R, G, B) = (240, 240, 38)
If the RGB value of this main color selection data D12 is converted to the HSV value, the result is as follows. Note that errors are omitted.
The main color selection data D12 (H, S, V) = (60, 0.84, 0.94)
In a case of changing the five pieces of vector information of the SVG data based on the main color selection data D12, the result is as follows when adjusted to the hue H = 60 of the main color selection data D12.
The color of the first vector information is (H, S, V) = (60, 142, 225)

The color of the second vector information is (H, S, V) = (60, 140, 200)
The color of the third vector information is (H, S, V) = (60, 96, 80)
The color of the fourth vector information is (H, S, V) = (60, 192, 200)
The color of the fifth vector information is (H, S, V) = (60, 160, 200)
If the five pieces of vector information of the SVG data are converted into HSV data based on the main color selection data D12 and then converted back into RGB values, the result is as follows.

The color of the first vector information is (R, G, B) = (225, 225, 99)

The color of the second vector information is (R, G, B) = (200, 200, 90)
The color of the third vector information is (R, G, B) = (80, 80, 49)
The color of the fourth vector information is (R, G, B) = (200, 200, 49)
The color of the fifth vector information is (R, G, B) = (200, 200, 74)
The contents editing application displays the SVG data thus converted as the addition candidate material 2403 of Fig. 24C.

As for the color balance adjustment of the present embodiment, the description is given of the example where the H value of the HSV value is used to change the SVG data based on the main color selection data D12. However, the present disclosure is not limited to this example. By performing the color balance adjustment, color conversion is performed so as to match the main color data, instead of matching all colors in one material with the main color data. Any color balance adjustment method may be used as long as the method brings the color of the material closer to the color of the main color selection data D12.

Another example of color balance adjustment will be described. For example, color balance adjustment may be performed by multiplying the respective R, G, and B values by a gain value, based on the main color selection data D12. A specific example will be described below.

The gain value is determined so that 0 is multiplied by 0.5 and 255 is multiplied by 2.0, around the median value of 128.

If the value is equal to or greater than 128, the gain values are calculated by the following formulas.

$$\text{R gain value} = 2.0 \times (\text{R value} - 128)/(255 - 128)$$

$$\text{G gain value} = 2.0 \times (\text{G value} - 128)/(255 - 128)$$

$$\text{B gain value} = 2.0 \times (\text{B value} - 128)/(255 - 128)$$

If the value is less than 128, the gain values are calculated by the following formulas.

$$\text{R gain value} = 1.0 - 0.5 \times (128 - \text{R value})/(128)$$

$$\text{G gain value} = 1.0 - 0.5 \times (128 - \text{G value})/(128)$$

$$\text{B gain value} = 1.0 - 0.5 \times (128 - \text{B value})/(128)$$

If the value is 128, the following formula is obtained

R, G, B gain values = 1.0

The calculated gain values are multiplied by the original RGB values to create color-converted data. In this case, the RGB values exceeding 255 are set to 255.

If the main color selection data D12 (R, G, B) = (250, 128, 50),

$$\text{R gain value} = 2.0 \times (250 - 128)/(255 - 128) = 1.92$$

$$\text{G gain value} = 1.0$$

$$\text{B gain value} = 1.0 - 0.5 \times (128 - 50)/(128) = 0.69$$

When the color of the vector information is (R, G, B) = (100, 200, 100), the values after color conversion are as follows.

$$\text{R value of vector information} = 100 \times 1.92 = 192$$

$$\text{R value of vector information} = 200 \times 1.0 = 200$$

$$\text{R value of vector information} = 100 \times 0.69 = 69$$

In the present embodiment, the description is given of the example where the SVG data such as illustrations or clip art is used as the addition candidate material, but the material whose color is adjusted is not limited thereto. For example, a marked portion of a two-dimensional code or the line color of a graphic may be added as an object so as to match the main color when added. In other words, the addition candidate material may be a two-dimensional code or a graphic. The material whose color is adjusted may also be image data, text data, rectangle data, background data, or a two-dimensional code.

(6-2) Flowchart of the Present Embodiment

A flowchart of the present embodiment is basically the same as the flowchart described in the first embodiment. More specifically, the color palette color scheme change processing of S 1205 in Fig. 12 is replaced with material selection UI color scheme change processing. The material selection UI color scheme change processing is equivalent to processing in which the color palette in the color palette color scheme change processing illustrated in Fig. 14 is replaced with a material selection UI. In this case, the color balance adjustment processing as described above is performed in the material selection UI color scheme change processing corresponding to S1405 in Fig. 14.

(6-3) Effects of the Present Embodiment

As described above, according to the present embodiment, the usability of the contents editing application can be improved. In the present embodiment, in a case of selecting a material to be added to contents as an object, a UI is provided that allows the user to select a material in a state where the material is previously matched to the desired color. This allows the user to add a material of the desired color as an object with fewer steps than a case of changing the color after placing the material in the editing object.

(7) Modification

The present embodiment has been described as being different from the embodiments described in the first and second embodiments, but may be combined with the embodiments described in the first and second embodiments.

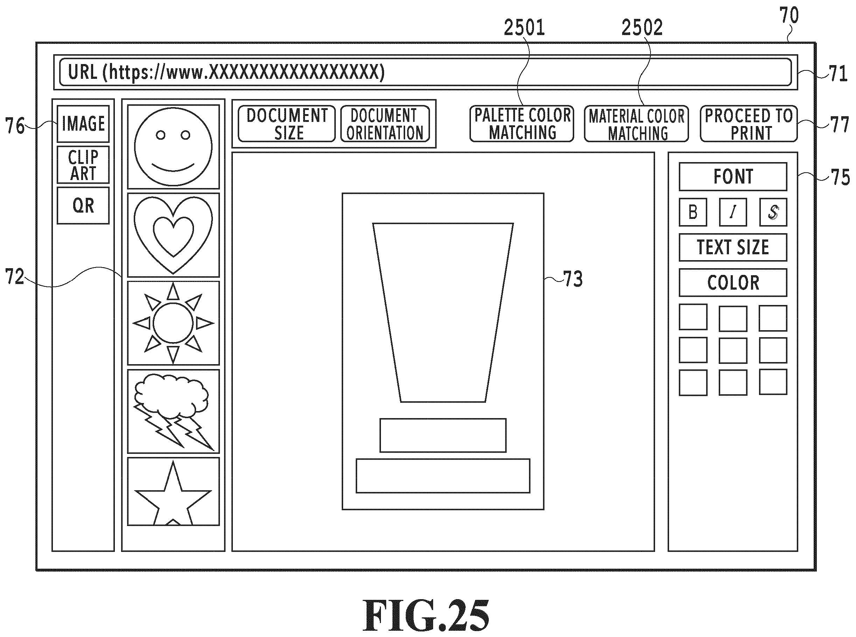

Fig. 25 is a diagram showing an example of an editing screen 70. The editing screen 70 in Fig. 25 is an example where a palette color matching setting button 2501 and a material color matching setting button 2502 are placed instead of the color matching setting button 78 in the editing screen 70 in Fig. 7. As the palette color matching setting button 2501 is pressed, the contents editing application performs the processing described in the first or second embodiment. As the material color matching setting button 2502 is pressed, on the other hand, the contents editing application performs the processing described in the third embodiment. The first to third embodiments may thus be combined as appropriate.
Alternatively, the material selection UI 72 may be changed based on the main color selection data D12, and the color palette 79 of the contents editing UI 75 may be changed based on the main color selection data D12 in a state where the changed object is added to the editing target contents. In other words, the first to third embodiments may be implemented in a mixed form.

(Fourth Embodiment)

In the present embodiment, a detailed example of using the color scheme setting save file F2 described in the first to third embodiments above will be described. Specifically, in each of the above embodiments, the main color selection data D12 is saved in the color scheme setting save file F2, and the color scheme can be changed again. In the present embodiment, a method for registering and deleting color scheme settings will be described.

(8) Basic Configuration

(8-1) Hardware Configuration

Since a hardware configuration of the present embodiment is the same as that of the first embodiment, description thereof will be omitted.

(8-2) Software Configuration

Since a software configuration of the present embodiment is the same as that of the first embodiment, description thereof will be omitted.

(9) Representative Configuration

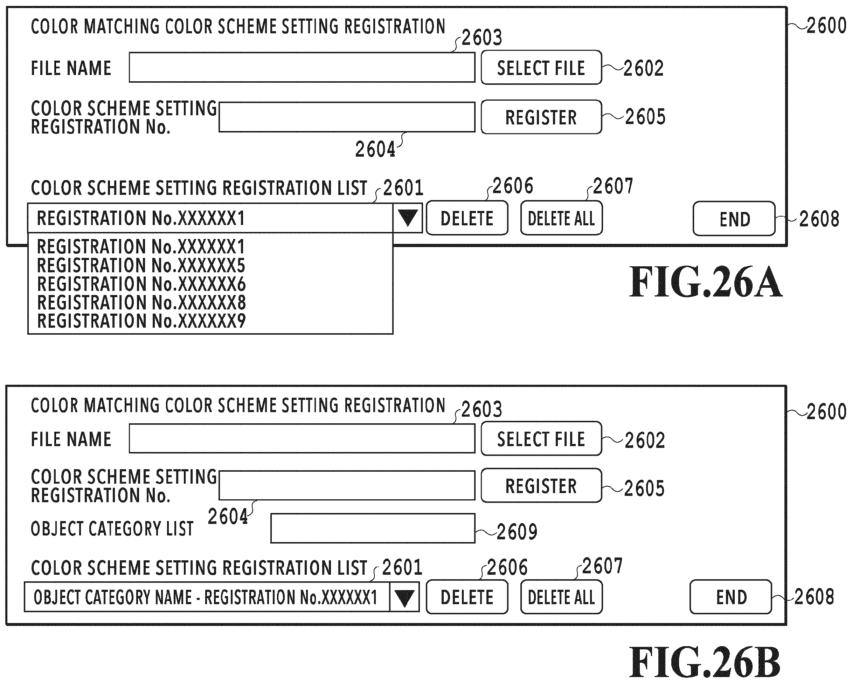

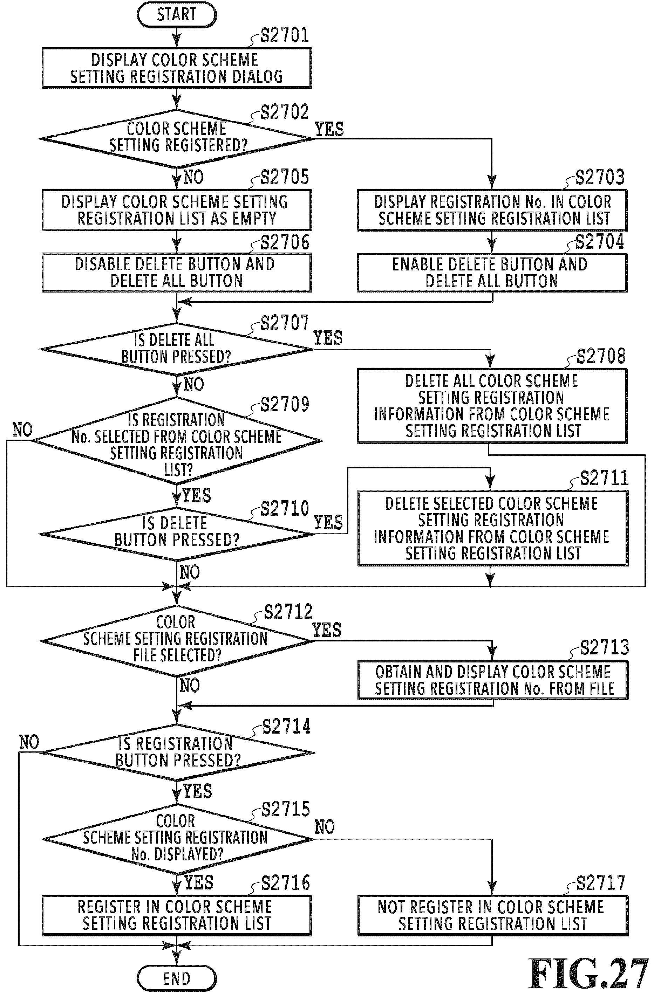

In the above embodiments, the description is given of the configuration example in which the main color selection data D12 is saved in the color scheme setting save file F2, and the color scheme is changed again. a method for registering and deleting color scheme settings will be described with reference to Figs. 26 and 27.

Figs. 26A and 26B are diagrams each illustrating the registration and deletion of color matching color scheme settings in the present embodiment. Figs. 26A and 26B each show a color scheme setting registration and deletion dialog 2600. The color scheme setting registration and deletion dialog 2600 is displayed as the color scheme setting button 1501 in Figs. 15A to 15E, the text color scheme setting button 2004 or the background color scheme setting button 2006 in Figs. 20E, or the color scheme setting buttons 2404, 2407, and 2408 in Figs. 24E and 24F are pressed, for example. The color scheme setting registration and deletion dialog 2600 is, for example, a dialog screen displayed on the editing screen 70 in Fig. 7.

As the color scheme setting registration and deletion dialog 2600 is displayed, the contents editing application determines whether or not there is a color scheme setting that has already been registered. If there is a registered color scheme setting, the contents editing application displays the registered registration number in a color scheme setting registration list 2601. In the color scheme setting registration list 2601, the main color selection data D12 included in the color scheme setting save file F2 is linked to an arbitrarily created registration number. Here, the registration number is displayed. If a plurality of color scheme settings are registered, the last registered registration number is displayed, for example, in the color scheme setting registration list 2601. The color scheme setting registration list 2601 is in a list format. If a plurality of color scheme settings are registered, the contents editing application can open the list based on a user instruction and receive the user instruction from among the plurality of registration numbers. Using the color scheme settings registered in the color scheme setting registration list 2601, the color scheme processing using the color scheme setting save file F2 described in the first to third embodiments is performed. If the plurality of color scheme settings are registered in the color scheme setting registration list 2601, the processing of switching the color scheme settings is performed as described in the first to third embodiments.

Next, an example of registering color scheme settings in the color scheme setting registration list 2601 will be described. The color scheme settings are registered using the already saved color scheme setting save file F2. If the user wishes to register a color scheme setting, he/she presses a file selection button 2602 to select a color scheme setting save file F2 saved in a PC, a smartphone, a tablet PC or the like. As the file selection button 2602 is pressed to select the color scheme setting save file F2, the contents editing application displays a file name of the selected color scheme setting save file F2 in a file name region 2603. The contents editing application also displays the registration number linked to the main color selection data D12 stored in the selected color scheme setting save file F2, in a color scheme setting registration number region 2604.

If a registration button 2605 is pressed while the registration number is displayed in the color scheme setting registration number region 2604, the contents editing application registers the contents of the file in the color scheme setting. If the registration is successful, the registered registration number is added to the list displayed in the color scheme setting registration list 2601.

Next, description will be given of processing in a case where the user wants to delete a registration from the registered color scheme setting registration list 2601. The contents editing application receives selection of the registration number to be deleted from the color scheme setting registration list 2601. If a delete button 2606 is pressed in a state where the selection is received, the contents editing application deletes the main color selection data D12 linked to the selected registration number and the registration number data from the color scheme setting registration list 2601.

The contents editing application can also delete all the registration data registered in the color scheme setting registration list 2601 at once. Specifically, if a delete all button 2607 is pressed, the contents editing application deletes all the main color selection data D12 and registration number data from the color scheme setting registration list 2601.

The color scheme settings can thus be registered and deleted using the color scheme setting registration and deletion dialog 2600. Upon completion of the color scheme setting, the user presses an end button 2608. As the end button 2608 is pressed, the contents editing application closes the color scheme setting registration and deletion dialog 2600.

Upon completion of the color scheme setting registration, one or more pieces of main color selection data D12 included in the color scheme setting save file F2 registered in the color scheme setting registration list 2601 is used as the selected main color selection data D12.

Fig. 27 is a flowchart of the color matching color scheme setting registration and deletion processing according to the present embodiment. The processing shown in Fig. 27 is realized by the CPU 101 reading and executing the client program stored in the ROM 102 or the like of the client computer 1000 into the RAM 103. More specifically, the processing of the flowchart shown in Fig. 27 is executed by the CPU 101 of the client computer 1000 having a Web browser. That is, the CPU 101 of the client computer 1000 reads and executes the client program received from the server computer 3000 into the RAM 103. The CPU 101 operating the Web browser executes the client program. As the client program is executed by the Web browser, a Web application provided by the server computer 3000 is executed through the Web browser. Note that, here, the processing of the flowchart shown in Fig. 27 is described using an example where the processing is executed by the client computer 1000. However, as described in the first embodiment, these processing may also be executed by the server computer 3000. Alternatively, instead of the Web application, the processing may be performed in accordance with a program installed in the client computer 1000 as a native application, as described in the first embodiment.

The processing of the flowchart in Fig. 27 is started as the color scheme setting button 1501 in Figs. 15A to 15E, the text color scheme setting button 2004 or the background color scheme setting button 2006 in Fig. 20E, or the color scheme setting button 2404, 2407 or 2408 in Figs. 24E and 24F, for example, is pressed.

In S2701, the CPU 101 displays the color scheme setting registration and deletion dialog 2600. In S2702, the CPU 101 determines whether or not there is a registered color scheme setting. If there is a registered color scheme setting, the CPU 101 proceeds to S2703. If there is no registered color scheme setting, the CPU 101 proceeds to S2705.

In S2703, the CPU 101 displays the registered registration number in the color scheme setting registration list. Next, in S2704, the CPU 101 enables the delete button and the delete all button. The CPU 101 then proceeds to S2707.

In S2705, the CPU 101 displays the color scheme setting registration list as empty. Next, in S2706, the CPU 101 disables the delete button and the delete all button. The CPU 101 then proceeds to S2707.

In S2707, the CPU 101 determines whether the delete all button is pressed. If the delete all button is pressed, the CPU 101 proceeds to S2708. In S2708, the CPU 101 deletes all the color scheme setting registration information from the color scheme setting registration list. The CPU 101 then proceeds to S2712. If the delete all button is not pressed in S2707, the CPU 101 proceeds to S2709.

In S2709, the CPU 101 determines whether a registration number is selected from the color scheme setting registration list. If the registration number is selected, the CPU 101 proceeds to S2710. If no registration number is selected, the CPU 101 proceeds to S2712.

In S2710, the CPU 101 determines whether the delete button is pressed. If the delete button is pressed, the CPU 101 proceeds to S2711. In S2711, the CPU 101 deletes the selected color scheme setting registration information from the color scheme setting registration list. The CPU 101 then proceeds to S2712. As described above, the color scheme setting registration information is information including the main color selection data D12 and the color scheme setting registration number linked to that data. If it is determined in S2710 that the delete button is not pressed, the CPU 101 proceeds to S2712.

In S2712, the CPU 101 determines whether a color scheme setting registration file is selected. For example, in a case where the user performs color matching color scheme setting registration, he/she presses the file selection button 2602 to select a color scheme setting save file F2. The CPU 101 proceeds to S2713 if the color scheme setting registration file is selected. The CPU 101 proceeds to S2714 if no color scheme setting registration file is selected. In S2713, the CPU 101 obtains and displays a color scheme setting registration number from the selected color scheme setting registration file. Note that, if the selected file is not the predefined color scheme setting save file F2, for example, if the file has a different extension or the like, the color scheme setting registration number cannot be obtained and cannot be displayed. After S2713, the CPU 101 proceeds to S2714.

In S2714, the CPU 101 determines whether the registration button is pressed. If the registration button is pressed, the CPU 101 proceeds to S2715. If the registration button is not pressed, the CPU 101 ends the processing of the flowchart shown in Fig. 27. In S2715, the CPU 101 determines whether a color scheme setting registration number is displayed. If the color scheme setting registration number is displayed, the CPU 101 proceeds to S2716. In S2716, the CPU 101 registers the color scheme setting registration information corresponding to the displayed color scheme setting registration number, in the color scheme setting registration list. That is, the main color selection data D12 linked to the color scheme setting registration number is registered. Then, the CPU 101 ends the processing of the flowchart shown in Fig. 27. If no color scheme setting registration number is displayed, on the other hand, the CPU 101 proceeds to S2717. In S2717, the CPU 101 ends the processing of the flowchart shown in Fig. 27 without registering any information in the color scheme setting registration list. The case where no color scheme setting registration number is displayed refers to, for example, a situation where no color scheme setting registration file is selected, a case where a color scheme setting registration file is selected but is not an appropriate color scheme setting save file F2, or the like.

The color scheme setting registration information registered in the color scheme setting registration list includes information having the main color selection data D12 linked to the color scheme setting registration number, but the information included in the color scheme setting registration information is not limited to such information. For example, as described in the second embodiment, a configuration may be employed that allows color scheme setting to be performed by object category. Therefore, information having the main color selection data D12 set by object category may be used as the color scheme setting registration information.

Fig. 26B shows an example of a color scheme setting registration and deletion dialog 2600 using object categories. As shown in Fig. 26B, an object category list 2609 may be prepared in advance. The object category list 2609 displays a list of the object category information D14 described in the second embodiment, and is configured so that an object category can be selected from the list.

Upon registration in the color scheme setting registered list, the user may select the object category information D14 from the object category list 2609 and perform an operation to link and register the object category information D14 and the main color selection data D12. Specifically, the contents editing application may register the object category information D14 and the main color selection data D12 in association with each other. By registering the main color selection data D12 for each piece of the object category information D14, the color scheme can be changed for each object category, as described in the second embodiment.

As described above, according to the present embodiment, the user can register or delete the main color selection data D12 as a color scheme setting if necessary. This makes it possible for the user to use the main color selection data D12 that has been used before, or edit the contents using the main color selection data D12 received from another user. The usability of the contents editing application can thus be improved.

(Other Embodiments)

In the above embodiments, the description is given as an example of the color scheme change of the color palette in the contents editing UI 75 and the color scheme change upon adding an object from a material. The description is also given of the example where the color scheme setting can be reused using a color scheme setting save file. Here, in a case of reusing the color scheme setting, for example, such a reuse scene is not limited to the color scheme change of the color palette or the color scheme change of the material. For example, before the user selects a template, the color scheme setting save file may be applied to change the color scheme of the template selection candidate. In a case where a template is composed of a combination of objects, as described in the second embodiment, the color scheme may be changed by applying corresponding main color selection data D12 to each of the objects constituting the template according to the object category.

In the above embodiments, the description is given of the example where the contents editing application obtains one file as the color extraction file F1 for extracting the main colors, but the present disclosure is not limited to this example. For example, a plurality of color extraction files F1 may be obtained. The contents editing application may then use each color extraction file F1 to perform the main color extraction processing and combine the main colors obtained from the plurality of files to set the color scheme of the color palette. The main colors may simply be added together, or if the main colors obtained from the plurality of files are within a predetermined color range, the color obtained by averaging the color values of those main colors may be used as the main color.

The description is also given of the example where the color extraction file F1 is bitmap image data (raster image data), vector image data such as SVG data, or an HTML file, but the present disclosure is not limited to these examples. Any form of data may be used as long as a desired color can be extracted from the data. For example, if the name of a color is known, the name of the color may be inputted. In the third embodiment, the color in the color extraction file F1 may be extracted by specifying the color palette whose color scheme has been changed in the first embodiment and the like, for example. Furthermore, a predetermined search may be performed and an image obtained as a result of the search may be used. For example, a person may not own an Oshi item recommended by his/her acquaintance, and may not have an image at hand in a case of giving the Oshi item to the acquaintance. Even if an image is not available, the processing of the above embodiments can be performed using an image available on the Web or the like.

The embodiments described above are the configuration example for achieving the effect of the present disclosure, and a case where the same effect can be obtained by using a similar method or different parameters is included in the scope of the present disclosure. In addition, the present disclosure can be applied to a system consisting of a plurality of devices (for example, a host computer, an interface device, a reader, a printer, and the like) and an apparatus consisting of one device (for example, a printer, a copying machine, a facsimile machine, or the like).

Embodiment(s) of the present disclosure can also be realized by a computer of a system or apparatus that reads out and executes computer executable instructions (for example, one or more programs) recorded on a storage medium (which may also be referred to more fully as a 'non-transitory computer-readable storage medium') to perform the functions of one or more of the above-described embodiment(s) and/or that includes one or more circuits (for example, application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (for example, central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the present disclosure is not limited to the disclosed exemplary embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

**Claims**

1. A non-transitory computer readable storage medium (104) storing a program which causes a computer to execute:

   obtaining (S1203) image data; and
   displaying (S1205) an object display region (72) in which an object is displayed, and an editing region (73) in which contents can be edited by adding the object, wherein
   the displaying includes displaying, on a basis of that a specific color is automatically extracted from the image data obtained, the object based on the specific color in the object display region .

2. The storage medium storing the program according to claim 1, wherein
   the displaying includes automatically extracting the specific color from the image data, and displaying the object based on the specific color in the object display region, in response to an operation of displaying the object display region.

3. The storage medium storing the program according to claim 1 or 2, wherein
   the displaying includes displaying, after automatically extracting the specific color from the image data, the object based on the specific color in the object display region before adding contents to the editing region.

4. The storage medium storing the program according to any one of claims 1 to 3, wherein
   the displaying includes changing, on a basis of that the specific color is automatically extracted from the image data obtained, a predetermined object to the object based on the specific color, and then displaying the object.

5. The storage medium storing the program according to any one of claims 1 to 4, wherein
   the displaying includes displaying a plurality of objects of different types in the object display region.

6. The storage medium storing the program according to claim 5, wherein
   the displaying includes displaying, on a basis of that the specific color is automatically extracted from the image data obtained, the plurality of objects of different types based on the specific color in the object display region.

7. The storage medium storing the program according to any one of claims 1 to 6, wherein

   the program further causes the computer to execute
   setting a plurality of the extracted specific colors, wherein
   the displaying includes displaying, in the object display region, the object based on the specific color selected by a user from among the plurality of specific colors thus set.

8. The storage medium storing the program according to claim 7, wherein
   the displaying includes displaying an item for selecting one specific color from among the plurality of specific colors thus set.

9. The storage medium storing the program according to any one of claims 1 to 8, wherein
   in a case where a plurality of the specific colors are extracted, the displaying includes displaying, in the object display region, the object based on a first color that is the specific color and the object based on a second color that is the specific color.

**10.** The storage medium storing the program according to any one of claims 1 to 9, wherein

the object is composed of a plurality of object elements, and
the displaying includes adjusting and displaying a color balance of each object so that each object element approaches the specific color.

**11.** The storage medium storing the program according to any one of claims 1 to 10, wherein

the object is composed of a plurality of object elements, and
the displaying includes adjusting and displaying a color of each object element so as to maintain brightness of each object element.

**12.** The storage medium storing the program according to any one of claims 1 to 11, wherein
the specific color is extracted on a basis of that the image data including the specific color is read by a user operation.

**13.** An information processing apparatus comprising:

one or more memories storing instructions; and
one or more processors executing the instructions to perform:

obtaining processing to obtain image data; and
display control processing to display an object display region in which an object is displayed, and an editing region in which contents can be edited by adding the object, wherein
the display control processing displays, on a basis of that a specific color is automatically extracted from the image data obtained by the obtaining processing, the object based on the specific color in the object display region.

**14.** A method for controlling an information processing apparatus, comprising:

obtaining image data; and
displaying an object display region in which an object is displayed, and an editing region in which contents can be edited by adding the object, wherein
the displaying includes displaying, on a basis of that a specific color is automatically extracted from the image data obtained, the object based on the specific color in the object display region.

**FIG.1**

FIG.2

**FIG.3**

**FIG.4**

EP 4 682 831 A1

**FIG.5**

EP 4 682 831 A1

**FIG.6**

**FIG.7**

URL (https://www.XXXXXXXXXXXXXXXX)

IMAGE

CLIP ART

QR

DOCUMENT SIZE

DOCUMENT ORIENTATION

COLOR MATCHING SETTING

PROCEED TO PRINT

FONT

B  I  S

TEXT SIZE

COLOR

70
71
74
78
77
75
79
76
72
73
40

EP 4 682 831 A1

COLOR MATCHING SETTING

CANCEL          COLOR EXTRACTION        MANUAL SETTING
                FILE SETTING

801             802                     803

**FIG.8A**

SELECT FILE

• LOAD IMAGE AND AUTOMATICALLY CHANGE
  PALETTE COLOR ACCORDING TO COLOR
  OR BRIGHTNESS OF IMAGE
• SELECT IMAGE TO EXTRACT COLOR

811

SELECT

812         CANCEL          OK

            813             814

**FIG.8B**

821                                              82

822

MAIN COLOR SELECTION
• SELECT COLOR TO BE USED

CANCEL          OK

823             824

**FIG.8C**

83

COLOR SCHEME SETTING CHANGE

• PRESS COLOR SCHEME CHANGE TO APPLY SELECTED
  COLOR TO PALETTE
• PRESS SAVE TO SAVE SELECTED COLOR AS FILE

CANCEL          CHANGE COLOR          SAVE
                SCHEME

831             832                   833

**FIG.8D**

EP 4 682 831 A1

FIG.9

**FIG.10A**   **FIG.10B**   **FIG.10C**

EP 4 682 831 A1

EP 4 682 831 A1

**FIG.11**

START

COLOR MATCHING SETTING
BUTTON IS PRESSED — S1201

DISPLAY COLOR MATCHING
SETTING DIALOG — S1202

MAIN COLOR SETTING
PROCESSING — S1203

IS THERE USER
INSTRUCTION? — S1204

CANCEL

SAVE

CHANGE COLOR SCHEME

COLOR PALETTE COLOR
SCHEME CHANGE PROCESSING — S1205

SAVE IN FILE — S1206

END

**FIG.12**

MAIN COLOR
SETTING PROCESSING
START

S1301
CANCEL COLOR
MATCHING SETTING? ——YES——→

NO
S1302
SELECTED COLOR
MATCHING SETTING? ——MANUAL SETTING——→

COLOR EXTRACTION
FILE SETTING

S1303
DISPLAY FILE SELECTION DIALOG

S1304
←YES—— CANCEL FILE
SELECTION?

NO S1305
EXECUTE FILE SELECTION

S1306
DISPLAY MAIN COLOR
SELECTION DIALOG

S1307
MAIN COLOR EXTRACTION
PROCESSING

S1309
OBTAIN EXISTING COLOR SETTING

S1308
←YES—— CANCEL MAIN
COLOR SELECTION?

NO

S1310
MAIN COLOR SELECTION
PROCESSING

END

# FIG.13

46

COLOR PALETTE
COLOR SCHEME
CHANGE PROCESSING
START

↓ S1401

OBTAIN NUMBER OF DISPLAY
COLORS TO BE DISPLAYED
IN COLOR PALETTE

↓ S1402

OBTAIN MAIN COLOR
SELECTION DATA

↓ S1403

COMPLETED
FOR NUMBER OF DISPLAY
COLORS IN COLOR
PALETTE? — YES

↓ NO

S1404

COMPLETED
FOR NUMBER OF SELECTIONS
IN MAIN COLOR SELECTION
DATA? — YES

↓ NO    S1405

CHANGE COLOR SCHEME OF
COLOR PALETTE

↓ S1406

DISPLAY COLOR PALETTE

↓

END

# FIG.14

FIG.15A

FIG.15B

FIG.15C

FIG.15D

FIG.15E

75

FONT

B | /  S

TEXT SIZE

COLOR

BL | RD | GR

79

75

FONT

B | /  S

TEXT SIZE

COLOR

PU | YE

79

75

FONT

B | /  S

TEXT SIZE

COLOR

PU | YE | BL

79

75

FONT

B | /  S

TEXT SIZE

COLOR

PU | YE | GR
BL | RD

79

75

FONT

B | /  S

TEXT SIZE

COLOR

PU | YE

COLOR SCHEME SETTING — 1501

REGISTRATION No.XXXXX — 1502

SWITCH — 1503

79

**FIG.16A**

**FIG.16B**

**FIG.16C**

EP 4 682 831 A1

**COLOR MATCHING SETTING**

| CANCEL | COLOR EXTRACTION FILE SETTING | MANUAL SETTING |

801      802      803

80

**FIG.17A**

---

**SELECT FILE**

- LOAD IMAGE AND AUTOMATICALLY CHANGE PALETTE COLOR ACCORDING TO COLOR OR BRIGHTNESS OF IMAGE
- SELECT IMAGE TO EXTRACT COLOR

811

| | SELECT |

812     | CANCEL | OK |

813      814

81

**FIG.17B**

---

82

821

822

**MAIN COLOR SELECTION**

- SELECT COLOR TO BE USED FOR EACH OBJECT

| OBJECT NAME | CANCEL | OK |

1701      823      824

**FIG.17C**

---

83

**COLOR SCHEME SETTING CHANGE**

- PRESS COLOR SCHEME CHANGE TO APPLY SELECTED COLOR TO PALETTE
- PRESS SAVE TO SAVE SELECTED COLOR AS FILE

| CANCEL | CHANGE COLOR SCHEME | SAVE |

831      832      833

**FIG.17D**

50

START

COLOR MATCHING SETTING
BUTTON IS PRESSED ⟋S1801

DISPLAY COLOR MATCHING
SETTING DIALOG ⟋S1802

| MAIN COLOR SETTING PROCESSING | ⟋S1803

CANCEL ◇ IS THERE USER
INSTRUCTION? ⟋S1804 SAVE

CHANGE COLOR SCHEME

YES ◇ COMPLETED
FOR NUMBER OF OBJECT
CATEGORIES? ⟋S1805

↓NO ⟋S1806

| COLOR PALETTE COLOR
SCHEME CHANGE PROCESSING |

| SAVE IN FILE | ⟋S1807

END

# FIG.18

MAIN COLOR
SETTING PROCESSING
START

S1901
CANCEL COLOR
MATCHING SETTING? — YES

NO

S1902
SELECTED COLOR
MATCHING SETTING? — MANUAL SETTING

COLOR EXTRACTION
FILE SETTING

S1903
DISPLAY FILE SELECTION DIALOG

S1904
CANCEL FILE
SELECTION? — YES

NO    S1905
EXECUTE FILE SELECTION

S1906
OBJECT EXTRACTION PROCESSING

S1913
OBTAIN OBJECT CATEGORY SETTING

S1907
OBJECT CATEGORY SETTING PROCESSING

S1914
COMPLETED
FOR NUMBER OF OBJECT
CATEGORIES? — YES

NO    S1915
OBTAIN EXISTING COLOR SETTING

S1908
COMPLETED
FOR NUMBER OF OBJECT
CATEGORIES? — YES

NO    S1909
DISPLAY MAIN COLOR SELECTION DIALOG

S1916
MAIN COLOR SELECTION PROCESSING

S1910
MAIN COLOR EXTRACTION PROCESSING

S1911
CANCEL MAIN
COLOR SELECTION? — YES

NO    S1912
MAIN COLOR SELECTION PROCESSING

**FIG.19**

END

52

**FIG.20A**

75

FONT | B | *S*
TEXT SIZE
TEXT COLOR | BL | RD | GR — 79a
BACKGROUND COLOR | BL | RD | GR — 79b

**FIG.20B**

75

FONT | B | *S*
TEXT SIZE
TEXT COLOR | PU | YE — 79a
BACKGROUND COLOR | GD | VE — 79b

**FIG.20C**

75

FONT | B | *S*
TEXT SIZE
TEXT COLOR | PU | YE | BL — 79a
BACKGROUND COLOR | GD | VE | BL — 79b

**FIG.20D**

75

FONT | B | *S*
TEXT SIZE
TEXT COLOR | PU | YE | GR / BL | RD | GR — 79a
BACKGROUND COLOR | GD | VE | GR / BL | RD | GR — 79b

**FIG.20E**

75

FONT | B | *S*
TEXT SIZE
TEXT COLOR SCHEME SETTING — 2004
REGISTRATION No.XXXXX — 2005
TEXT COLOR | PU | YE — 79a
BACKGROUND COLOR SCHEME SETTING — 2006
REGISTRATION No.XXXXX — 2007
| GD | VE — 79b

**FIG.21A**

~70

~73

TEXT 1

TEXT 2

**FIG.21B**

~70

~75

FONT

B  I  S

TEXT SIZE

BK ~791

TEXT COLOR

PU  YE ~79a

2103

73

2102

TEXT 1 ~2101

TEXT 2

**FIG.21C**

~70

~75

RD ~791

BACKGROUND COLOR

GD  VE ~79b

2103

73

2101

TEXT 1 ~2102

TEXT 2

# FIG.22A

# FIG.22B

# FIG.22C

EP 4 682 831 A1

**COLOR MATCHING SETTING** — 80

CANCEL — 801
COLOR EXTRACTION FILE SETTING — 802
MANUAL SETTING — 803

**FIG.23A**

**SELECT FILE** — 81

· LOAD IMAGE AND AUTOMATICALLY CHANGE MATERIAL COLOR TO BE SELECTED ACCORDING TO COLOR OR BRIGHTNESS OF IMAGE
· SELECT IMAGE TO EXTRACT COLOR

SELECT — 811
812
CANCEL — 813
OK — 814

**FIG.23B**

821 — 82
822

**MAIN COLOR SELECTION**
· SELECT COLOR TO BE USED

CANCEL — 823
OK — 824

**FIG.23C**

**COLOR SCHEME SETTING CHANGE** — 83

· PRESS COLOR SCHEME CHANGE TO APPLY SELECTED COLOR TO MATERIAL
· PRESS SAVE TO SAVE SELECTED COLOR AS FILE

CANCEL — 831
CHANGE COLOR SCHEME — 832
SAVE — 833

**FIG.23D**

FIG.24A    FIG.24B    FIG.24C    FIG.24D  FIG.24E    FIG.24F

FIG.24G

**FIG.25**

COLOR MATCHING COLOR SCHEME SETTING REGISTRATION ~2603 ~2600

FILE NAME [ ] SELECT FILE ~2602

COLOR SCHEME SETTING REGISTRATION No. [ ] REGISTER ~2605

2604

COLOR SCHEME SETTING REGISTRATION LIST ~2601 ~2606 ~2607

| REGISTRATION No.XXXXXX1 ▼ | DELETE | DELETE ALL | END ~2608 |

REGISTRATION No.XXXXXX1
REGISTRATION No.XXXXXX5
REGISTRATION No.XXXXXX6
REGISTRATION No.XXXXXX8
REGISTRATION No.XXXXXX9

**FIG.26A**

COLOR MATCHING COLOR SCHEME SETTING REGISTRATION ~2603 ~2600

FILE NAME [ ] SELECT FILE ~2602

COLOR SCHEME SETTING REGISTRATION No. [ ] REGISTER ~2605

2604

OBJECT CATEGORY LIST [ ] ~2609

COLOR SCHEME SETTING REGISTRATION LIST ~2601 ~2606 ~2607

| OBJECT CATEGORY NAME - REGISTRATION No.XXXXXX1 ▼ | DELETE | DELETE ALL | END ~2608 |

**FIG.26B**

FIG.27

## EUROPEAN SEARCH REPORT

Application Number

EP 25 18 8727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/140241 A1 (MALONEY CHRISTOPHER MICHAEL [US] ET AL) 18 May 2017 (2017-05-18) | 1-6,9-14 | INV. G06T11/00 G06T11/60 G06F3/04845 |
| A | * abstract * * figures 1-13 * * paragraph [0005] * * paragraph [0021] - paragraph [0126] * ----- | 7,8 | |

TECHNICAL FIELDS SEARCHED (IPC)

G06T

The present search report has been drawn up for all claims

| Place of search | Date of completion of the search | Examiner |
|---|---|---|
| Munich | 1 December 2025 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8727

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | Publication date | Patent family member(s) | | Publication date |
|---|---|---|---|---|
| US 2017140241 A1 | 18-05-2017 | US | 2017140241 A1 | 18-05-2017 |
| | | WO | 2017083189 A1 | 18-05-2017 |

EPO FORM P0459

For more details about this annex : see Official Journal of the European Patent Office, No. 12/82

**EP 4 682 831 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008146227 A